# EUROPEAN PATENT APPLICATION

(11) **EP 4 181 588 A1**
(43) Date of publication of application: **17.05.2023**
(21) Application number: 21854509.3
(22) Date of filing: 02.08.2021
(51) Int. Cl.: H04W 60/00

(54) **METHOD FOR TERMINAL TO ACCESS PUBLIC AND PRIVATE NETWORKS AND COMMUNICATION APPARATUS**

(30) Priority: 04.08.2020 CN 202010774822
(71) Applicant: Huawei Technologies Co., Ltd., Shenzhen, Guangdong 518129 (CN)
(72) Inventor: ZHU, Qianghua, Shenzhen, Guangdong 518129 (CN); WU, Wenfu, Shenzhen, Guangdong 518129 (CN)
(74) Representative: Pfenning, Meinig & Partner mbB
(86) International application number: PCT/CN2021/110146
(87) International publication number: WO 2022/028380

(57) **Abstract**

This application discloses a method for a terminal to access public and private networks and a communications apparatus. When a terminal registers with a first network, a policy management network element of the first network configures, for the terminal, a route selection policy of the terminal for a PDU session of a second network, and the terminal may select, based on the route selection policy, the first network to establish the PDU session of the second network. In this way, with permission of the first network, the terminal may select the first network to establish the PDU session of the second network. When the terminal supports dual radio, the terminal receives a network selection policy of a mobility management network element of the first network, and performs registration of the terminal in the second network based on the network selection policy. In this way, when the terminal has a dual radio capability, the terminal is allowed to perform registration twice, thereby fully activating the dual radio capability of the terminal. The terminal may simultaneously access the first network and the second network, and separately access services of the two networks.

## Description

This application claims priority to Chinese Patent Application No. 202010774822.0, filed with the China National Intellectual Property Administration on August 4, 2020 and entitled "METHOD FOR TERMINAL TO ACCESS PUBLIC AND PRIVATE NETWORKS AND COMMUNICATIONS APPARATUS", which is incorporated herein by reference in its entirety.

### TECHNICAL FIELD

This application relates to the field of communications technologies, and in particular, to a method for a terminal to access a public network (public network) ("public network" for short) and a non-public network (non-public network, NPN) ("private network" for short) and a communications apparatus.

### BACKGROUND

An NPN is a non-public 5^{th} generation (5^{th} generation, 5G) mobile communications network. The NPN may be implemented by relying on support of a public land mobile network (public land mobile network, PLMN), that is, may be a public network integrated non-public network (public network integrated non-public network, PNI-NPN); or may be implemented without relying on a network function of the PLMN, that is, may be a standalone non-public network (standalone non-public network, SNPN).

The PNI-NPN provides an NPN service by using the PLMN network, for example, implements a non-public network function by allocating one or more network slice (network slice) entities to the NPN. In addition, to prevent an unauthorized terminal from attempting to access and select the PNI-NPN, a closed access group (closed access group, CAG) function may be additionally used. A CAG may be determined by using a public land mobile network identity (public land mobile network identity, PLMN ID) and a closed access group identity (close access group identity, CAG ID). A relationship between a terminal and a CAG is similar to a subscription. A CAG-enabled cell allows only a subscribed terminal to access the cell. When a terminal subscribes to a CAG, two pieces of information are configured in subscription information. One piece of information is an allowed CAG list (allowed CAG list) of the terminal, and the list stores IDs of all CAG cells that can be accessed by the terminal currently. The other piece of information is a CAG-only indication (CAG-only indication) that indicates whether the terminal can only use a CAG cell to access the network. A terminal configured with the indication can only use a CAG cell to access the network. During initial access and cell reselection, a base station needs to broadcast a CAG ID supported by the base station and corresponding PLMN ID information (each base station broadcasts a maximum of 12 CAG IDs). A CAG terminal not configured with the CAG-only indication may select an accessible CAG cell based on an allowed CAG list of the terminal, or may select a subscribed public PLMN cell to access the network. A CAG terminal configured with the CAG-only indication can only select an accessible CAG cell based on an allowed CAG list of the terminal to access the network. A core network may authenticate an identity of a terminal based on subscription information of the terminal.

The SNPN network is identified by using a PLMN ID and a network identifier (network identifier, NID), which are collectively referred to as a standalone non-public network identifier (SNPN ID). The PLMN ID may be an inherent value reserved by a third-party operator, or may be a specific value of a PLMN operator deploying the SNPN. In the SNPN network, a cell of the SNPN network broadcasts the PLMN ID and the NID. A terminal selects a to-be-accessed NPN network based on broadcast information and configured network selection information. If the UE finds that the configured network selection information (a PLMN ID and an NID 1) is different from the PLMN ID broadcast by the network, or if the UE finds that the configured network selection information (the PLMN ID and the NID 1) is different from the PLMN ID and an NID 2 that are broadcast by the network, the UE does not select the network to access the network.

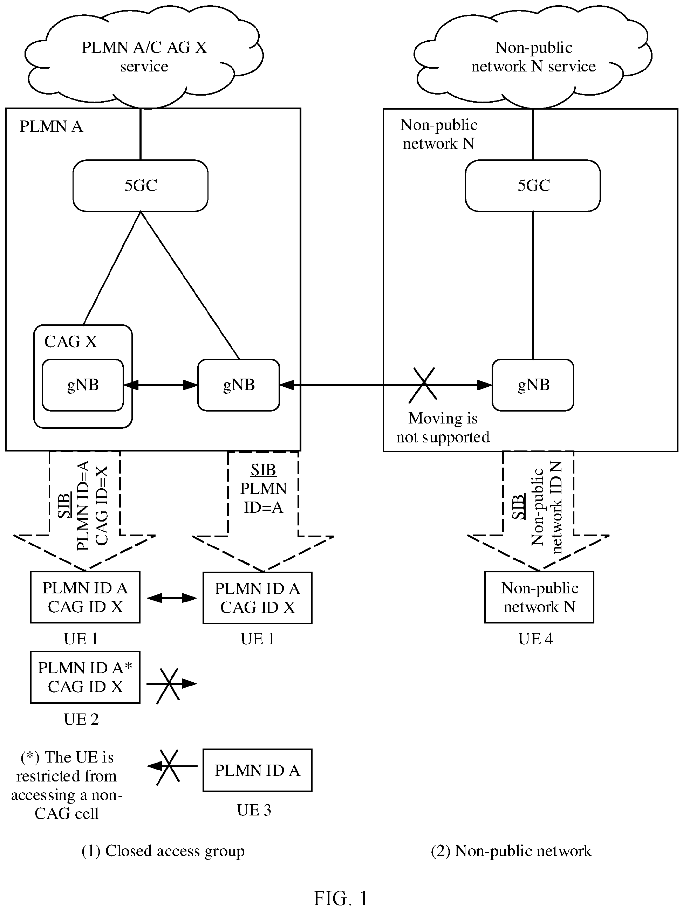

In a schematic diagram of an NPN network shown in FIG. 1, a figure on the left is a PNI-NPN network, and the NPN is integrated in a PLMN A. A base station broadcasts a CAG ID supported by the base station and corresponding PLMN ID information. A terminal may select an accessible CAG cell based on an allowed CAG list of the terminal. Two base stations are included in the PNI-NPN network. A base station 1 provides only a PLMN service. A base station 2 allocates a network slice to provide an NPN service, and broadcasts a PLMN ID and a CAG ID in a system information block (system information block, SIB). UE 1 is not configured with the CAG-only indication, and therefore, can access both the PLMN network of the base station 1 and the NPN network of the base station 2. UE 2 is configured with the CAG-only indication, and can only access the NPN network of the base station 2. UE 3 is a terminal unauthorized by the NPN network, and can only access the PLMN network of the base station 1. A figure on the right is an SNPN network. There is no interworking between the SNPN network and the PLMN network.

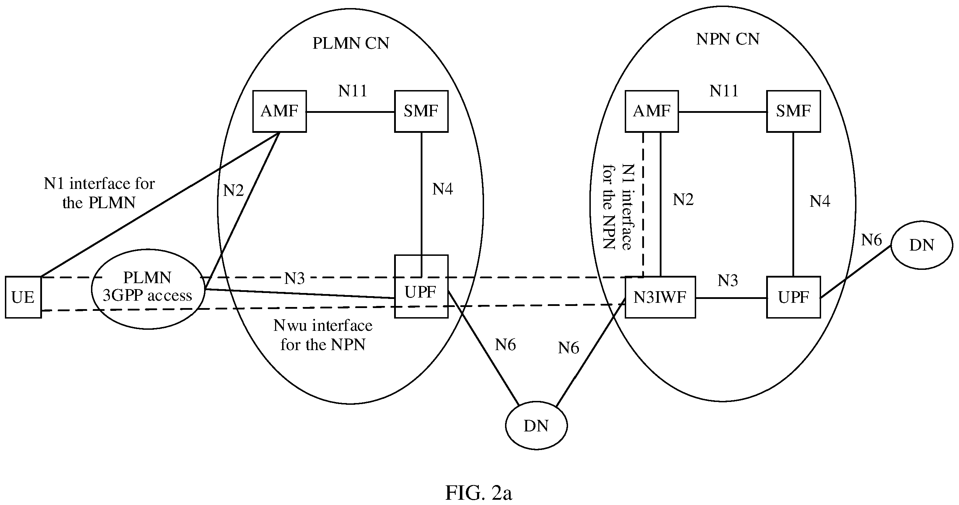

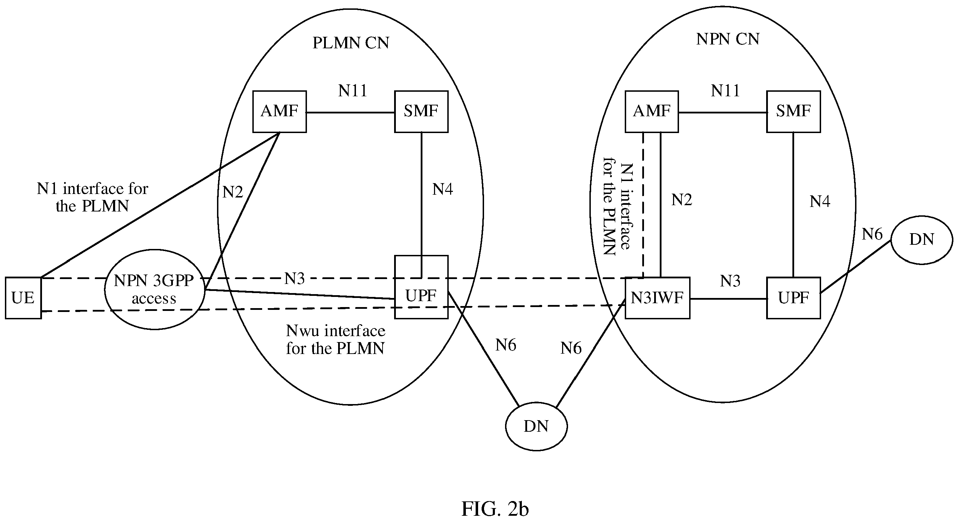

As shown in FIG. 2a and FIG. 2b, interworking between an SNPN network and a PLMN network is implemented by using a non-3GPP interworking function (non-3GPP inter-working function, N3IWF) architecture. A terminal has two subscriptions, and separately subscribes to the SNPN and the PLMN. As shown in FIG. 2a, when the terminal is in an NG-RAN coverage area of the SNPN, to access a PLMN service, the terminal obtains an IP connection, and establishes a connection by using an N3IWF of the PLMN. As shown in FIG. 2b, when the terminal is in an NG-RAN coverage area of the PLMN, to access an NPN service, the UE obtains an IP connection, and establishes a connection by using an N3IWF of the SNPN.

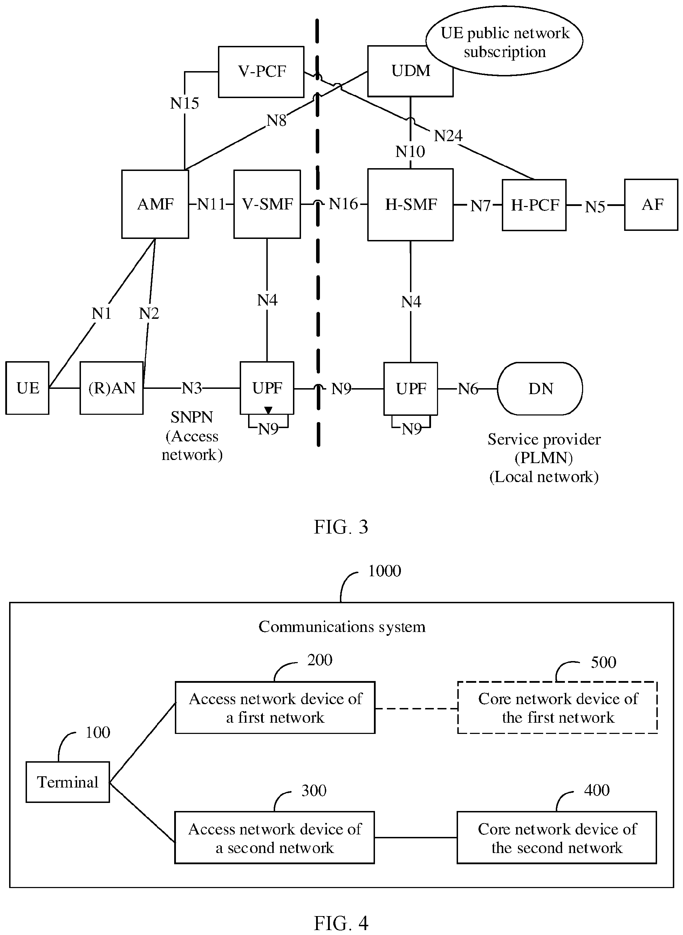

FIG. 3 is a schematic diagram of another structure that implements interworking between an SNPN network and a PLMN network by using a roaming architecture. A terminal subscribes only to the PLMN, that is, has a single subscription. The terminal uses a public network subscription of the PLMN to select an SNPN ID to access an SNPN base station, registers with the SNPN network, and establishes a protocol data unit (protocol data unit, PDU) session in the SNPN. The SNPN network determines a local break out (local break out, LBO)/home routing (home routing, HR) mode based on the public network subscription of the terminal, to establish the PDU session.

However, for a device that accesses a private network by using a PLMN subscription, a related implementation solution about whether the device is allowed to use a private network base station resource to perform a public network service is not provided at present.

### SUMMARY

This application provides a method for a terminal to access public and private networks and a communications apparatus, so that when permission is obtained from a first network, the first network is selected to establish a PDU session of a second network.

According to a first aspect, a method for a terminal to access public and private networks is provided. The method includes: sending a first registration request, where the first registration request is used to request registration of a terminal in a first network; receiving a route selection policy of the terminal for a protocol data unit PDU session of a second network, where the route selection policy is used to indicate the terminal to select the first network to establish the PDU session of the second network, and the second network is a home network of the terminal; and selecting, based on the route selection policy, the first network to establish the PDU session of the second network. In this aspect, when the terminal registers with the first network, a policy management network element of the first network configures, for the terminal, the route selection policy of the terminal for the PDU session of the second network, and the terminal may select, based on the route selection policy, the first network to establish the PDU session of the second network. In this way, with permission of the first network, the terminal may select the first network to establish the PDU session of the second network.

With reference to the first aspect, in a possible implementation, the first registration request includes a capability of the terminal. Alternatively, the method further includes: sending a radio resource control message, where the radio resource control message includes a capability of the terminal. In this implementation, the capability of the terminal may be carried in the first registration request, where the first registration request is a non-access stratum message. The capability of the terminal may alternatively be sent by using a separate radio resource control message, where the radio resource control message is an access stratum message.

With reference to the first aspect, in another possible implementation, the capability of the terminal is used to indicate a capability of receiving and sending a signal by the terminal. Specifically, the capability of the terminal includes supporting single radio by the terminal or supporting dual radio by the terminal.

With reference to the first aspect, in another possible implementation, the selecting, based on the route selection policy, the first network to establish the PDU session of the second network includes: selecting, based on the route selection policy, the first network to send a session establishment request, where the session establishment request is used to request to establish the PDU session of the second network by using the first network.

With reference to the first aspect, in another possible implementation, the method further includes: receiving a PDU session rejection response message, where the PDU session rejection response message includes a rejection reason, and the rejection reason is used to indicate that establishment of the PDU session of the second network by using the first network is rejected; and skipping, based on the rejection reason, selecting the first network to request to establish the PDU session of the second network; or starting a timer, and skipping, in a timing time, selecting the first network to request to establish the PDU session of the second network; or updating a local configuration of the terminal. In this implementation, by performing the foregoing operations, the terminal may be prevented from continuing to send the registration request and entering an infinite loop.

With reference to the first aspect, in another possible implementation, the session establishment request includes at least one of the following parameters: a data network identifier DNN and slice information, and the at least one parameter is used to indicate to establish the PDU session of the second network.

According to a second aspect, a method for a terminal to access public and private networks is provided. The method includes: obtaining at least one piece of the following information: a capability of a terminal and a network policy, where the capability of the terminal is used to indicate a capability of receiving and sending a signal by the terminal, and the network policy is used to indicate that a first network allows or prohibits the terminal from selecting the first network to establish a protocol data unit PDU session of a second network, and/or used to indicate that the second network allows or prohibits the terminal from registering with the second network twice by using a same subscription; determining a route selection policy of the terminal for the protocol data unit PDU session of the second network based on at least one of the capability of the terminal or the network policy, where the route selection policy is used to indicate the terminal to select the first network to establish the PDU session of the second network; and configuring the route selection policy for the terminal. In this aspect, when the terminal registers with the first network, a policy management network element of the first network configures, for the terminal, the route selection policy of the terminal for the PDU session of the second network, and the terminal may select, based on the route selection policy, the first network to establish the PDU session of the second network. In this way, with permission of the first network, the terminal may select the first network to establish the PDU session of the second network.

With reference to the second aspect, in a possible implementation, the capability of the terminal includes supporting single radio by the terminal or supporting dual radio by the terminal.

With reference to the second aspect, in another possible implementation, the determining a route selection policy of the terminal for the PDU session of the second network based on at least one of the capability of the terminal or the network policy includes: if the terminal supports dual radio, and the terminal is allowed to register with the second network twice by using a same subscription, determining that the route selection policy is rejecting selection of the first network by the terminal to establish the PDU session of the second network; or if the terminal supports single radio, and the terminal is prohibited from selecting the first network to establish the PDU session of the second network, determining that the route selection policy is rejecting selection of the first network by the terminal to establish the PDU session of the second network; or if the terminal supports single radio, and the terminal is allowed to select the first network to establish the PDU session of the second network, determining that the route selection policy is allowing the terminal to select the first network to establish the PDU session of the second network.

With reference to the second aspect, in another possible implementation, a session establishment request includes at least one of the following parameters: a data network identifier DNN and slice information, and the at least one parameter is used to indicate to establish the PDU session of the second network.

According to a third aspect, a method for a terminal to access public and private networks is provided. The method includes: receiving a session establishment request from a terminal, where the session establishment request is used to request to establish a PDU session of a second network by using a first network; determining, based on at least one of a capability of the terminal or a network policy, that the terminal is not allowed to select the first network to establish the PDU session of the second network; and sending a PDU session rejection response message to the terminal, where the PDU session rejection response message includes a rejection reason, and the rejection reason is used to indicate that establishment of the PDU session of the second network by using the first network is rejected. In this aspect, when the terminal registers with the first network, and when it is determined, based on at least one of the capability of the terminal or the network policy, that the terminal is not allowed to select the first network to establish the PDU session of the second network, establishment of the session by the terminal is rejected. In this way, selection of the first network by the terminal to establish the PDU session of the second network may be controlled.

With reference to the third aspect, in a possible implementation, the capability of the terminal includes supporting single radio by the terminal or supporting dual radio by the terminal.

With reference to the third aspect, in another possible implementation, the determining, based on at least one of a capability of the terminal or a network policy, that the terminal is not allowed to select the first network to establish the PDU session of the second network includes: if the terminal supports dual radio, rejecting selection of the first network by the terminal to establish the PDU session of the second network; or if the terminal supports single radio, and the network policy prohibits the terminal from selecting the first network to establish the PDU session of the second network, rejecting selection of the first network by the terminal to establish the PDU session of the second network.

With reference to the third aspect, in another possible implementation, the method further includes: if the terminal supports single radio, and the network policy allows the terminal to select the first network to establish the PDU session of the second network, determining that the terminal is allowed to select the first network to establish the PDU session of the second network.

With reference to the third aspect, in another possible implementation, the session establishment request includes at least one of the following parameters: a data network identifier DNN and slice information, and the at least one parameter is used to indicate to establish the PDU session of the second network.

According to a fourth aspect, a communications apparatus is provided, and is configured to perform the method in any one of the first aspect or the possible implementations of the first aspect. The communications apparatus may be the terminal in any one of the first aspect or the possible implementations of the first aspect, or a module applied to the terminal, for example, a chip or a chip system. The communications apparatus includes a corresponding module, unit, or means (means) for implementing the foregoing method, and the module, unit, or means may be implemented by hardware, implemented by software, or implemented by hardware executing corresponding software. The hardware or the software includes one or more modules or units corresponding to the foregoing functions.

With reference to the fourth aspect, in a possible implementation, the communications apparatus includes a transceiver unit and a processing unit. The transceiver unit is configured to send a first registration request, where the first registration request is used to request registration of a terminal in a first network. The transceiver unit is further configured to receive a route selection policy of the terminal for a protocol data unit PDU session of a second network, where the route selection policy is used to indicate the terminal to select the first network to establish the PDU session of the second network, and the second network is a home network of the terminal. The processing unit is configured to select, based on the route selection policy, the first network to establish the PDU session of the second network.

Optionally, the first registration request includes a capability of the terminal. Alternatively, the transceiver unit is further configured to send a radio resource control message, where the radio resource control message includes a capability of the terminal.

Optionally, the processing unit is configured to select, based on the route selection policy, the first network to send a session establishment request, where the session establishment request is used to request to establish the PDU session of the second network by using the first network.

Optionally, the transceiver unit is further configured to receive a PDU session rejection response message, where the PDU session rejection response message includes a rejection reason, and the rejection reason is used to indicate that establishment of the PDU session of the second network by using the first network is rejected. The processing unit is further configured to skip, based on the rejection reason, selecting the first network to request to establish the PDU session of the second network; or the processing unit is further configured to start a timer, and skip, in a timing time, selecting the first network to request to establish the PDU session of the second network; or the processing unit is further configured to update a local configuration of the terminal.

With reference to the fourth aspect, in another possible implementation, the communications apparatus includes an input interface, an output interface, and a processing circuit. The output interface is configured to send a first registration request, where the first registration request is used to request registration of a terminal in a first network. The input interface is further configured to receive a route selection policy of the terminal for a protocol data unit PDU session of a second network, where the route selection policy is used to indicate the terminal to select the first network to establish the PDU session of the second network, and the second network is a home network of the terminal. The processing circuit is configured to select, based on the route selection policy, the first network to establish the PDU session of the second network.

Optionally, the first registration request includes a capability of the terminal. Alternatively, the output interface is further configured to send a radio resource control message, where the radio resource control message includes a capability of the terminal.

Optionally, the processing circuit is configured to select, based on the route selection policy, the first network to send a session establishment request, where the session establishment request is used to request to establish the PDU session of the second network by using the first network.

Optionally, the input interface is further configured to receive a PDU session rejection response message, where the PDU session rejection response message includes a rejection reason, and the rejection reason is used to indicate that establishment of the PDU session of the second network by using the first network is rejected. The processing circuit is further configured to skip, based on the rejection reason, selecting the first network to request to establish the PDU session of the second network; or the processing circuit is further configured to start a timer, and skip, in a timing time, selecting the first network to request to establish the PDU session of the second network; or the processing circuit is further configured to update a local configuration of the terminal.

For example, the communications apparatus further includes a memory, and the memory is coupled to at least one processor. The at least one processor is configured to run program instructions stored in the memory, so that the communications apparatus performs the method in any one of the first aspect or the possible implementations of the first aspect.

In a possible implementation, the memory is configured to store program instructions and data. The memory is coupled to the at least one processor, and the at least one processor may invoke and execute the program instructions stored in the memory, so that the communications apparatus performs the method in any one of the first aspect or the possible implementations of the first aspect.

For example, the communications apparatus further includes a communications interface, and the communications interface is used by the communications apparatus to communicate with another device. When the communications apparatus is a terminal, the communications interface is a transceiver, an input/output interface, a circuit, or the like.

In a possible design, the communications apparatus includes: at least one processor and a communications interface, configured to perform the method in any one of the first aspect or the possible implementations of the first aspect, specifically including: The at least one processor communicates with the outside by using the communications interface; and the at least one processor is configured to run a computer program, so that the communications apparatus performs the method in any one of the first aspect or the possible implementations of the first aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the fourth aspect, refer to the technical effects brought by different design manners in the first aspect. Details are not described herein.

According to a fifth aspect, a communications apparatus is provided, and is configured to perform the method in any one of the second aspect or the possible implementations of the second aspect. The communications apparatus may be a policy control function (policy control function, PCF) entity in any one of the second aspect or the possible implementations of the second aspect, or a module applied to the PCF, for example, a chip or a chip system. The communications apparatus includes a corresponding module, unit, or means for implementing the foregoing method, and the module, unit, or means may be implemented by hardware, implemented by software, or implemented by hardware executing corresponding software. The hardware or the software includes one or more modules or units corresponding to the foregoing functions.

With reference to the fifth aspect, in a possible implementation, the communications apparatus includes a processing unit and a transceiver unit. The processing unit is configured to obtain at least one piece of the following information: a capability of a terminal and a network policy, where the capability of the terminal is used to indicate a capability of receiving and sending a signal by the terminal, and the network policy is used to indicate that a first network allows or prohibits the terminal from selecting the first network to establish a protocol data unit PDU session of a second network, and/or used to indicate that the second network allows or prohibits the terminal from registering with the second network twice by using a same subscription. The processing unit is further configured to determine a route selection policy of the terminal for the protocol data unit PDU session of the second network based on at least one of the capability of the terminal or the network policy, where the route selection policy is used to indicate the terminal to select the first network to establish the PDU session of the second network. The transceiver unit is configured to configure the route selection policy for the terminal.

Optionally, the processing unit is specifically configured to: if the terminal supports dual radio, and the terminal is allowed to register with the second network twice by using a same subscription, determine that the route selection policy is rejecting selection of the first network by the terminal to establish the PDU session of the second network; or if the terminal supports single radio, and the terminal is prohibited from selecting the first network to establish the PDU session of the second network, determine that the route selection policy is rejecting selection of the first network by the terminal to establish the PDU session of the second network; or if the terminal supports single radio, and the terminal is allowed to select the first network to establish the PDU session of the second network, determine that the route selection policy is allowing the terminal to select the first network to establish the PDU session of the second network.

With reference to the fifth aspect, in another possible implementation, the communications apparatus includes an input interface, an output interface, and a processing circuit. The processing circuit is configured to obtain at least one piece of the following information: a capability of a terminal and a network policy, where the capability of the terminal is used to indicate a capability of receiving and sending a signal by the terminal, and the network policy is used to indicate that a first network allows or prohibits the terminal from selecting the first network to establish a protocol data unit PDU session of a second network, and/or used to indicate that the second network allows or prohibits the terminal from registering with the second network twice by using a same subscription. The processing circuit is further configured to determine a route selection policy of the terminal for the protocol data unit PDU session of the second network based on at least one of the capability of the terminal or the network policy, where the route selection policy is used to indicate the terminal to select the first network to establish the PDU session of the second network. The output interface is configured to configure the route selection policy for the terminal.

Optionally, the processing circuit is specifically configured to: if the terminal supports dual radio, and the terminal is allowed to register with the second network twice by using a same subscription, determine that the route selection policy is rejecting selection of the first network by the terminal to establish the PDU session of the second network; or if the terminal supports single radio, and the terminal is prohibited from selecting the first network to establish the PDU session of the second network, determine that the route selection policy is rejecting selection of the first network by the terminal to establish the PDU session of the second network; or if the terminal supports single radio, and the terminal is allowed to select the first network to establish the PDU session of the second network, determine that the route selection policy is allowing the terminal to select the first network to establish the PDU session of the second network.

For example, the communications apparatus further includes a memory, and the memory is coupled to at least one processor. The at least one processor is configured to run program instructions stored in the memory, so that the communications apparatus performs the method in any one of the second aspect or the possible implementations of the second aspect.

In a possible implementation, the memory is configured to store program instructions and data. The memory is coupled to the at least one processor, and the at least one processor may invoke and execute the program instructions stored in the memory, so that the communications apparatus performs the method in any one of the second aspect or the possible implementations of the second aspect.

For example, the communications apparatus further includes a communications interface, and the communications interface is used by the communications apparatus to communicate with another device. When the communications apparatus is a PCF, the communications interface is a transceiver, an input/output interface, a circuit, or the like.

In a possible design, the communications apparatus includes: at least one processor and a communications interface, configured to perform the method in any one of the second aspect or the possible implementations of the second aspect, specifically including: The at least one processor communicates with the outside by using the communications interface; and the at least one processor is configured to run a computer program, so that the communications apparatus performs the method in any one of the second aspect or the possible implementations of the second aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the fifth aspect, refer to the technical effects brought by different design manners in the second aspect. Details are not described herein.

According to a sixth aspect, a communications apparatus is provided, and is configured to perform the method in any one of the third aspect or the possible implementations of the third aspect. The communications apparatus may be an access and mobility management function (access and mobility management function, AMF) entity in any one of the third aspect or the possible implementations of the third aspect, or a module applied to the AMF, for example, a chip or a chip system. The communications apparatus includes a corresponding module, unit, or means for implementing the foregoing method, and the module, unit, or means may be implemented by hardware, implemented by software, or implemented by hardware executing corresponding software. The hardware or the software includes one or more modules or units corresponding to the foregoing functions.

With reference to the sixth aspect, in a possible implementation, the communications apparatus includes a transceiver unit and a processing unit. The transceiver unit is configured to receive a session establishment request from a terminal, where the session establishment request is used to request to establish a PDU session of a second network by using a first network. The processing unit is configured to determine, based on at least one of a capability of the terminal or a network policy, that the terminal is not allowed to select the first network to establish the PDU session of the second network. The transceiver unit is further configured to send a PDU session rejection response message to the terminal, where the PDU session rejection response message includes a rejection reason, and the rejection reason is used to indicate that establishment of the PDU session of the second network by using the first network is rejected.

Optionally, the processing unit is specifically configured to: if the terminal supports dual radio, reject selection of the first network by the terminal to establish the PDU session of the second network; or if the terminal supports single radio, and the network policy prohibits the terminal from selecting the first network to establish the PDU session of the second network, reject selection of the first network by the terminal to establish the PDU session of the second network.

Optionally, the processing unit is specifically configured to: if the terminal supports single radio, and the network policy allows the terminal to select the first network to establish the PDU session of the second network, determine that the terminal is allowed to select the first network to establish the PDU session of the second network.

With reference to the sixth aspect, in another possible implementation, the communications apparatus includes an input interface, an output interface, and a processing circuit. The input interface is configured to receive a session establishment request from a terminal, where the session establishment request is used to request to establish a PDU session of a second network by using a first network. The processing circuit is configured to determine, based on at least one of a capability of the terminal or a network policy, that the terminal is not allowed to select the first network to establish the PDU session of the second network. The output interface is further configured to send a PDU session rejection response message to the terminal, where the PDU session rejection response message includes a rejection reason, and the rejection reason is used to indicate that establishment of the PDU session of the second network by using the first network is rejected.

Optionally, the processing circuit is specifically configured to: if the terminal supports dual radio, reject selection of the first network by the terminal to establish the PDU session of the second network; or if the terminal supports single radio, and the network policy prohibits the terminal from selecting the first network to establish the PDU session of the second network, reject selection of the first network by the terminal to establish the PDU session of the second network.

Optionally, the processing circuit is specifically configured to: if the terminal supports single radio, and the network policy allows the terminal to select the first network to establish the PDU session of the second network, determine that the terminal is allowed to select the first network to establish the PDU session of the second network.

For example, the communications apparatus further includes a memory, and the memory is coupled to at least one processor. The at least one processor is configured to run program instructions stored in the memory, so that the communications apparatus performs the method in any one of the third aspect or the possible implementations of the third aspect.

In a possible implementation, the memory is configured to store program instructions and data. The memory is coupled to the at least one processor, and the at least one processor may invoke and execute the program instructions stored in the memory, so that the communications apparatus performs the method in any one of the third aspect or the possible implementations of the third aspect.

For example, the communications apparatus further includes a communications interface, and the communications interface is used by the communications apparatus to communicate with another device. When the communications apparatus is an AMF, the communications interface is a transceiver, an input/output interface, a circuit, or the like.

In a possible design, the communications apparatus includes: at least one processor and a communications interface, configured to perform the method in any one of the third aspect or the possible implementations of the third aspect, specifically including: The at least one processor communicates with the outside by using the communications interface; and the at least one processor is configured to run a computer program, so that the communications apparatus performs the method in any one of the third aspect or the possible implementations of the third aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the sixth aspect, refer to the technical effects brought by different design manners in the third aspect. Details are not described herein.

According to a seventh aspect, a communications system is provided, including the communications apparatus in any one of the third aspect or the implementations of the third aspect and the communications apparatus in any one of the fourth aspect or the implementations of the fourth aspect.

This application provides another method for a terminal to access public and private networks and a communications apparatus, to fully activate a dual radio capability of a terminal.

According to an eighth aspect, a method for a terminal to access public and private networks is provided. The method includes: sending a first registration request, where the first registration request is used to request registration of a terminal in a first network, and the first registration request includes a capability of the terminal, or sending the first registration request and the capability of the terminal; receiving a network selection policy, where the network selection policy is used to indicate the terminal to register with a second network; and sending a second registration request based on the network selection policy, where the second registration request is used to request registration of the terminal in the second network. In this aspect, when the terminal supports dual radio, the terminal receives the network selection policy of a mobility management network element of the first network, and performs registration of the terminal in the second network based on the network selection policy. In this way, when the terminal has a dual radio capability, the terminal is allowed to perform registration twice, thereby fully activating the dual radio capability of the terminal. The terminal may simultaneously access the first network and the second network, and separately access services of the two networks.

With reference to the eighth aspect, in a possible implementation, the capability of the terminal includes supporting single radio by the terminal or supporting dual radio by the terminal.

With reference to the eighth aspect, in another possible implementation, the method further includes: receiving temporary identity reuse indication information and a first temporary identity of the terminal, where the temporary identity reuse indication information is used to indicate whether the first temporary identity of the terminal can be reused when the terminal registers with the second network. In this aspect, when the first network and the second network share some or all core network elements, the temporary identity reuse indication information is used to indicate that the first temporary identity of the terminal can be reused when the terminal registers with the second network. When the first network and the second network do not share a core network element, the temporary identity reuse indication information is used to indicate that the first temporary identity of the terminal cannot be reused when the terminal registers with the second network.

With reference to the eighth aspect, in another possible implementation, a second registration response is received. When the temporary identity reuse indication information is used to indicate that the first temporary identity of the terminal cannot be reused when the terminal registers with the second network, the second registration request includes an identifier of the terminal, and the second registration response includes a second temporary identity of the terminal; or when the temporary identity reuse indication information is used to indicate that the first temporary identity of the terminal can be reused when the terminal registers with the second network, the second registration response includes the first temporary identity of the terminal.

According to a ninth aspect, a method for a terminal to access public and private networks is provided. The method includes: receiving a first registration request, where the first registration request is used to request registration of a terminal in a first network, and the first registration request includes a capability of the terminal, or receiving the first registration request and the capability of the terminal; determining a network selection policy based on at least one of the capability of the terminal, a network policy, or a network topology, where the network selection policy is used to indicate the terminal to register with a second network; and sending the network selection policy.

With reference to the ninth aspect, in a possible implementation, the method further includes: determining temporary identity reuse indication information based on the network topology, where the temporary identity reuse indication information is used to indicate whether a first temporary identity of the terminal can be reused when the terminal registers with the second network, and the network topology is used to indicate whether the first network and the second network share a core network element; and sending the temporary identity reuse indication information and the first temporary identity of the terminal.

With reference to the ninth aspect, in another possible implementation, the method further includes: receiving a second registration request, where the second registration request is used to request registration of the terminal in the second network; and sending a second registration response if the temporary identity reuse indication information is used to indicate that the first temporary identity of the terminal can be reused when the terminal registers with the second network, where the second registration response includes the first temporary identity of the terminal.

According to a tenth aspect, a method for a terminal to access public and private networks is provided. The method includes: receiving a first network element registration request from a first mobility management network element, where the first network element registration request includes an identifier of a terminal and at least one piece of the following first information: an identifier of the first mobility management network element, an identifier of a first network, a standalone non-public network SNPN access mode, and a 3^{rd} Generation Partnership Project 3GPP access type; storing a first context of the terminal, where the first context of the terminal includes the at least one piece of first information; receiving a second network element registration request from a second mobility management network element, where the second network element registration request includes the identifier of the terminal and at least one piece of the following second information: an identifier of the second mobility management network element, an identifier of a second network, an SNPN access mode, and a 3GPP access type; and storing a second context of the terminal, where the second context of the terminal includes the at least one piece of second information. In this aspect, when the terminal registers with different networks, a UDM separately stores different contexts of the terminal.

With reference to the tenth aspect, in a possible implementation, the first context of the terminal is used to determine the first mobility management network element serving the terminal, or determine whether the terminal performs access by using an SNPN network. The second context of the terminal is used to determine the second mobility management network element serving the terminal, or determine whether the terminal performs access by using an SNPN network.

According to an eleventh aspect, a communications apparatus is provided, and is configured to perform the method in any one of the eighth aspect or the possible implementations of the eighth aspect. The communications apparatus may be the terminal in any one of the eighth aspect or the possible implementations of the eighth aspect, or a module applied to the terminal, for example, a chip or a chip system. The communications apparatus includes a corresponding module, unit, or means (means) for implementing the foregoing method, and the module, unit, or means may be implemented by hardware, implemented by software, or implemented by hardware executing corresponding software. The hardware or the software includes one or more modules or units corresponding to the foregoing functions.

With reference to the eleventh aspect, in a possible implementation, the communications apparatus includes a transceiver unit. The transceiver unit is configured to send a first registration request, where the first registration request is used to request registration of a terminal in a first network, and the first registration request includes a capability of the terminal; or the transceiver unit is configured to send the first registration request and the capability of the terminal. The transceiver unit is further configured to receive a network selection policy, where the network selection policy is used to indicate the terminal to register with a second network. The transceiver unit is further configured to send a second registration request based on the network selection policy, where the second registration request is used to request registration of the terminal in the second network.

Optionally, the transceiver unit is further configured to receive temporary identity reuse indication information and a first temporary identity of the terminal, where the temporary identity reuse indication information is used to indicate whether the first temporary identity of the terminal can be reused when the terminal registers with the second network.

Optionally, the transceiver unit is further configured to receive a second registration response. When the temporary identity reuse indication information is used to indicate that the first temporary identity of the terminal cannot be reused when the terminal registers with the second network, the second registration request includes an identifier of the terminal, and the second registration response includes a second temporary identity of the terminal; or when the temporary identity reuse indication information is used to indicate that the first temporary identity of the terminal can be reused when the terminal registers with the second network, the second registration response includes the first temporary identity of the terminal.

With reference to the eleventh aspect, in another possible implementation, the communications apparatus includes an input interface, an output interface, and a processing circuit. The output interface is configured to send a first registration request, where the first registration request is used to request registration of a terminal in a first network, and the first registration request includes a capability of the terminal; or the output interface is configured to send the first registration request and the capability of the terminal. The input interface is further configured to receive a network selection policy, where the network selection policy is used to indicate the terminal to register with a second network. The output interface is further configured to send a second registration request based on the network selection policy, where the second registration request is used to request registration of the terminal in the second network.

Optionally, the input interface is further configured to receive temporary identity reuse indication information and a first temporary identity of the terminal, where the temporary identity reuse indication information is used to indicate whether the first temporary identity of the terminal can be reused when the terminal registers with the second network.

Optionally, the input interface is further configured to receive a second registration response. When the temporary identity reuse indication information is used to indicate that the first temporary identity of the terminal cannot be reused when the terminal registers with the second network, the second registration request includes an identifier of the terminal, and the second registration response includes a second temporary identity of the terminal; or when the temporary identity reuse indication information is used to indicate that the first temporary identity of the terminal can be reused when the terminal registers with the second network, the second registration response includes the first temporary identity of the terminal.

For example, the communications apparatus further includes a memory, and the memory is coupled to at least one processor. The at least one processor is configured to run program instructions stored in the memory, so that the communications apparatus performs the method in any one of the eighth aspect or the possible implementations of the eighth aspect.

In a possible implementation, the memory is configured to store program instructions and data. The memory is coupled to the at least one processor, and the at least one processor may invoke and execute the program instructions stored in the memory, so that the communications apparatus performs the method in any one of the eighth aspect or the possible implementations of the eighth aspect.

For example, the communications apparatus further includes a communications interface, and the communications interface is used by the communications apparatus to communicate with another device. When the communications apparatus is a terminal, the communications interface is a transceiver, an input/output interface, a circuit, or the like.

In a possible design, the communications apparatus includes: at least one processor and a communications interface, configured to perform the method in any one of the eighth aspect or the possible implementations of the eighth aspect, specifically including: The at least one processor communicates with the outside by using the communications interface; and the at least one processor is configured to run a computer program, so that the communications apparatus performs the method in any one of the eighth aspect or the possible implementations of the eighth aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the eleventh aspect, refer to the technical effects brought by different design manners in the eighth aspect. Details are not described herein.

According to a twelfth aspect, a communications apparatus is provided, and is configured to perform the method in any one of the ninth aspect or the possible implementations of the ninth aspect. The communications apparatus may be an AMF in any one of the ninth aspect or the possible implementations of the ninth aspect, or a module applied to the AMF, for example, a chip or a chip system. The communications apparatus includes a corresponding module, unit, or means for implementing the foregoing method, and the module, unit, or means may be implemented by hardware, implemented by software, or implemented by hardware executing corresponding software. The hardware or the software includes one or more modules or units corresponding to the foregoing functions.

With reference to the twelfth aspect, in a possible implementation, the communications apparatus includes a processing unit and a transceiver unit. The transceiver unit is configured to receive a first registration request, where the first registration request is used to request registration of a terminal in a first network, and the first registration request includes a capability of the terminal; or the transceiver unit is configured to receive the first registration request and the capability of the terminal. The processing unit is configured to determine a network selection policy based on at least one of the capability of the terminal, a network policy, or a network topology, where the network selection policy is used to indicate the terminal to register with a second network. The transceiver unit is further configured to send the network selection policy.

Optionally, the processing unit is further configured to determine temporary identity reuse indication information based on the network topology, where the temporary identity reuse indication information is used to indicate whether a first temporary identity of the terminal can be reused when the terminal registers with the second network, and the network topology is used to indicate whether the first network and the second network share a core network element. The transceiver unit is further configured to send the temporary identity reuse indication information and the first temporary identity of the terminal.

Optionally, the transceiver unit is further configured to receive a second registration request, where the second registration request is used to request registration of the terminal in the second network. The transceiver unit is further configured to send a second registration response if the temporary identity reuse indication information is used to indicate that the first temporary identity of the terminal can be reused when the terminal registers with the second network, where the second registration response includes the first temporary identity of the terminal.

With reference to the twelfth aspect, in another possible implementation, the communications apparatus includes an input interface, an output interface, and a processing circuit. The input interface is configured to receive a first registration request, where the first registration request is used to request registration of a terminal in a first network, and the first registration request includes a capability of the terminal; or the input interface is configured to receive the first registration request and the capability of the terminal. The processing circuit is configured to determine a network selection policy based on at least one of the capability of the terminal, a network policy, or a network topology, where the network selection policy is used to indicate the terminal to register with a second network. The output interface is configured to send the network selection policy.

Optionally, the processing circuit is further configured to determine temporary identity reuse indication information based on the network topology, where the temporary identity reuse indication information is used to indicate whether a first temporary identity of the terminal can be reused when the terminal registers with the second network, and the network topology is used to indicate whether the first network and the second network share a core network element. The output interface is further configured to send the temporary identity reuse indication information and the first temporary identity of the terminal.

Optionally, the input interface is further configured to receive a second registration request, where the second registration request is used to request registration of the terminal in the second network. The output interface is further configured to send a second registration response if the temporary identity reuse indication information is used to indicate that the first temporary identity of the terminal can be reused when the terminal registers with the second network, where the second registration response includes the first temporary identity of the terminal.

For example, the communications apparatus further includes a memory, and the memory is coupled to at least one processor. The at least one processor is configured to run program instructions stored in the memory, so that the communications apparatus performs the method in any one of the ninth aspect or the possible implementations of the ninth aspect.

In a possible implementation, the memory is configured to store program instructions and data. The memory is coupled to the at least one processor, and the at least one processor may invoke and execute the program instructions stored in the memory, so that the communications apparatus performs the method in any one of the ninth aspect or the possible implementations of the ninth aspect.

For example, the communications apparatus further includes a communications interface, and the communications interface is used by the communications apparatus to communicate with another device. When the communications apparatus is an AMF, the communications interface is a transceiver, an input/output interface, a circuit, or the like.

In a possible design, the communications apparatus includes: at least one processor and a communications interface, configured to perform the method in any one of the ninth aspect or the possible implementations of the ninth aspect, specifically including: The at least one processor communicates with the outside by using the communications interface; and the at least one processor is configured to run a computer program, so that the communications apparatus performs the method in any one of the ninth aspect or the possible implementations of the ninth aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the twelfth aspect, refer to the technical effects brought by different design manners in the ninth aspect. Details are not described herein.

According to a thirteenth aspect, a communications apparatus is provided, and is configured to perform the method in any one of the tenth aspect or the possible implementations of the tenth aspect. The communications apparatus may be a unified data management (unified data management, UDM) function entity in any one of the tenth aspect or the possible implementations of the tenth aspect, or a module applied to the UDM, for example, a chip or a chip system. The communications apparatus includes a corresponding module, unit, or means for implementing the foregoing method, and the module, unit, or means may be implemented by hardware, implemented by software, or implemented by hardware executing corresponding software. The hardware or the software includes one or more modules or units corresponding to the foregoing functions.

With reference to the thirteenth aspect, in a possible implementation, the communications apparatus includes a transceiver unit and a processing unit. The transceiver unit is configured to receive a first network element registration request from a first mobility management network element, where the first network element registration request includes an identifier of a terminal and at least one piece of the following first information: an identifier of the first mobility management network element, an identifier of a first network, a standalone non-public network SNPN access mode, and a 3^{rd} Generation Partnership Project 3GPP access type. The processing unit is configured to store a first context of the terminal, where the first context of the terminal includes the at least one piece of first information. The transceiver unit is further configured to receive a second network element registration request from a second mobility management network element, where the second network element registration request includes the identifier of the terminal and at least one piece of the following second information: an identifier of the second mobility management network element, an identifier of a second network, an SNPN access mode, and a 3GPP access type. The processing unit is further configured to store a second context of the terminal, where the second context of the terminal includes the at least one piece of second information.

With reference to the thirteenth aspect, in another possible implementation, the communications apparatus includes an input interface, an output interface, and a processing circuit. The input interface is configured to receive a first network element registration request from a first mobility management network element, where the first network element registration request includes an identifier of a terminal and at least one piece of the following first information: an identifier of the first mobility management network element, an identifier of a first network, a standalone non-public network SNPN access mode, and a 3^{rd} Generation Partnership Project 3GPP access type. The processing circuit is configured to store a first context of the terminal, where the first context of the terminal includes the at least one piece of first information. The input interface is further configured to receive a second network element registration request from a second mobility management network element, where the second network element registration request includes the identifier of the terminal and at least one piece of the following second information: an identifier of the second mobility management network element, an identifier of a second network, an SNPN access mode, and a 3GPP access type. The processing circuit is further configured to store a second context of the terminal, where the second context of the terminal includes the at least one piece of second information.

For example, the communications apparatus further includes a memory, and the memory is coupled to at least one processor. The at least one processor is configured to run program instructions stored in the memory, so that the communications apparatus performs the method in any one of the tenth aspect or the possible implementations of the tenth aspect.

In a possible implementation, the memory is configured to store program instructions and data. The memory is coupled to the at least one processor, and the at least one processor may invoke and execute the program instructions stored in the memory, so that the communications apparatus performs the method in any one of the tenth aspect or the possible implementations of the tenth aspect.

For example, the communications apparatus further includes a communications interface, and the communications interface is used by the communications apparatus to communicate with another device. When the communications apparatus is a UDM, the communications interface is a transceiver, an input/output interface, a circuit, or the like.

In a possible design, the communications apparatus includes: at least one processor and a communications interface, configured to perform the method in any one of the tenth aspect or the possible implementations of the tenth aspect, specifically including: The at least one processor communicates with the outside by using the communications interface; and the at least one processor is configured to run a computer program, so that the communications apparatus performs the method in any one of the tenth aspect or the possible implementations of the tenth aspect. It may be understood that the outside may be an object outside the processor, or an object outside the communications apparatus.

In another possible design, the communications apparatus is a chip or a chip system. The communications interface may be an input/output interface, an interface circuit, an output circuit, an input circuit, a pin, a related circuit, or the like on the chip or the chip system. The processor may alternatively be embodied as a processing circuit or a logic circuit.

For technical effects brought by any design manner in the thirteenth aspect, refer to the technical effects brought by different design manners in the tenth aspect. Details are not described herein.

According to a fourteenth aspect, a communications system is provided, including the communications apparatus in any one of the twelfth aspect or the implementations of the twelfth aspect and the communications apparatus in any one of the thirteenth aspect or the implementations of the thirteenth aspect.

According to a fifteenth aspect, a computer-readable storage medium is provided, which stores a computer program. When the computer program is run on a computer, the method in any one of the foregoing aspects or the implementations of the aspects is performed.

According to a sixteenth aspect, a computer program product is provided. When the computer program product is run on a computer, the method in any one of the foregoing aspects or the implementations of the aspects is performed.

According to a seventeenth aspect, a computer program is provided. When the computer program is run on a computer, the method in any one of the foregoing aspects or the implementations of the aspects is performed.

### BRIEF DESCRIPTION OF DRAWINGS

FIG. 1 is a schematic diagram of an NPN network;
FIG. 2a is a schematic diagram of a structure that implements interworking between an SNPN network and a PLMN network by using an N3IWF;
FIG. 2b is a schematic diagram of another structure that implements interworking between an SNPN network and a PLMN network by using an N3IWF;
FIG. 3 is a schematic diagram of a structure that implements interworking between an SNPN network and a PLMN network by using a roaming architecture;
FIG. 4 is a schematic diagram of an architecture of a communications system to which a method for a terminal to access public and private networks according to an embodiment of this application is applied;
FIG. 5a is a schematic diagram of a non-roaming architecture that is of a 5^{th} generation mobile communications network and that is based on a service-oriented interface;
FIG. 5b is a schematic diagram of a non-roaming architecture that is of a 5^{th} generation mobile communications network and that is based on a reference point;
FIG. 6 is a schematic diagram of a structure of a communications apparatus 600 according to an embodiment of this application;
FIG. 7a is a schematic diagram of an architecture in which an SNPN network and a PLMN network each use an independent control plane;
FIG. 7b is a schematic diagram of an architecture in which an SNPN network and a PLMN network share a control plane;
FIG. 8 is a schematic flowchart of a method for a terminal to access public and private networks according to an embodiment of this application;
FIG. 9A and FIG. 9B are another schematic flowchart of a method for a terminal to access public and private networks according to an embodiment of this application;
FIG. 10A and FIG. 10B are another schematic flowchart of a method for a terminal to access public and private networks according to an embodiment of this application;
FIG. 11 is another schematic flowchart of a method for a terminal to access public and private networks according to an embodiment of this application;
FIG. 12A to FIG. 12C are another schematic flowchart of a method for a terminal to access public and private networks according to an embodiment of this application;
FIG. 13A to FIG. 13C are another schematic flowchart of a method for a terminal to access public and private networks according to an embodiment of this application;
FIG. 14A to FIG. 14C are another schematic flowchart of a method for a terminal to access public and private networks according to an embodiment of this application;
FIG. 15A to FIG. 15C are another schematic flowchart of a method for a terminal to access public and private networks according to an embodiment of this application;
FIG. 16 is a schematic diagram of a structure of a communications apparatus 700 according to an embodiment of this application;
FIG. 17 is a schematic diagram of a structure of a communications apparatus 800 according to an embodiment of this application;
FIG. 18 is a schematic diagram of a structure of a communications apparatus 900 according to an embodiment of this application;
FIG. 19 is a schematic diagram of a structure of a communications apparatus 1000 according to an embodiment of this application;
FIG. 20 is a schematic diagram of a structure of a communications apparatus 2000 according to an embodiment of this application; and
FIG. 21 is a schematic diagram of a structure of a communications apparatus 3000 according to an embodiment of this application.

### DESCRIPTION OF EMBODIMENTS

The following describes embodiments of this application with reference to the accompanying drawings in embodiments of this application.

FIG. 4 is a schematic diagram of an architecture of a communications system to which a method for a terminal to access public and private networks according to an embodiment of this application is applied. As shown in FIG. 4, the communications system 1000 includes a terminal 100, an access network device 200 of a first network, an access network device 300 of a second network, and a core network device 400 of the second network. Optionally, when the first network and the second network each use an independent control plane, the communications system may further include a core network device 500 of the first network. Optionally, when the first network and the second network share a control plane, the first network and the second network share the core network device 400 of the second network. The terminal 100 accesses the first network by using the access network device 200 of the first network, and establishes communication with a data network by using the core network device 500 of the first network. The terminal 100 accesses the second network by using the access network device 300 of the second network, and establishes communication with the data network by using the core network device 400 of the second network.

Although not shown, the communications system may further include another network element. This is not specifically limited in this embodiment of this application.

The technical solution in this embodiment of this application may be applied to various communications systems, for example, a 5G system, a new radio (new radio, NR) system, or a next-generation communications system, such as a 6G system. A 5G mobile communications system in this application includes a non-standalone (non-standalone, NSA) 5G mobile communications system or a standalone (standalone, SA) 5G mobile communications system. The technical solution provided in this application may be further applied to a future communications system, for example, a 6^{th} generation mobile communications system. The communications system may alternatively be a public land mobile network (public land mobile network, PLMN) network, a device-to-device (device-to-device, D2D) communications system, a machine to machine (machine to machine, M2M) communications system, an internet of things (internet of things, IoT) communications system, an internet of vehicles communications system, or another communications system.

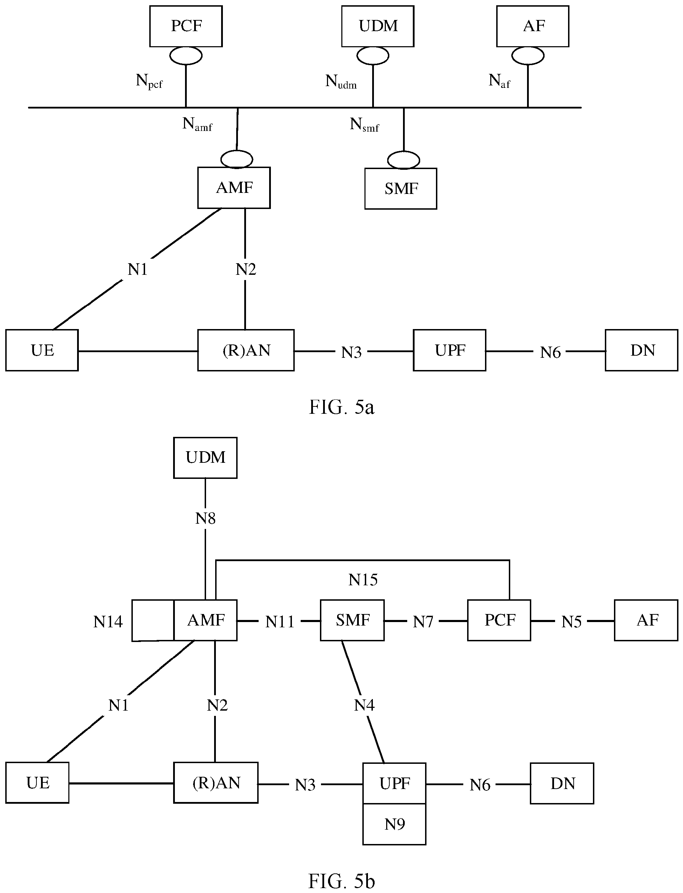

Specifically, a non-roaming architecture, shown in FIG. 5a, that is of a 5^{th} generation mobile communications network and that is based on a service-oriented interface and a non-roaming architecture, shown in FIG. 5b, that is of a 5^{th} generation mobile communications network and that is based on a reference point are used as examples. The core network device of the first network/second network mainly includes an access and mobility management function (access and mobility management function, AMF) entity, a policy control function (policy control function, PCF) entity, and a unified data management (unified data management, UDM) function entity; and may further include a session management function (session management function, SMF) entity, a user plane function (user plane function, UPF) entity, and an application function (application function, AF) entity. It should be noted that function entities included in FIG. 5a and FIG. 5b and functions of the function entities may be the same. FIG. 5a is based on the service-oriented interface, but FIG. 5b is based on the reference point.

The functions of the function entities in FIG. 5a and FIG. 5b are as follows:

AMF entity: is mainly responsible for signaling processing, for example, functions such as access control, mobility management, attach and detach, and gateway selection. When the AMF entity provides a service for a session in the terminal, the AMF entity provides a storage resource of the control plane for the session, to store a session identifier, an SMF entity identifier associated with the session identifier, and the like.

SMF entity: is mainly responsible for session management, and is specifically responsible for selecting a user plane function entity, redirecting the user plane function entity, allocating an internet protocol (internet protocol, IP) address, establishing, modifying, and releasing a bearer, and controlling quality of service (quality of service, QoS).

UPF entity: is responsible for forwarding and receiving user data in the terminal. The UPF entity may receive user data from the data network (data network, DN), and transmit the user data to the terminal by using the access network device. The UPF entity may further receive user data from the terminal by using the access network device, and forward the user data to the data network. In the UPF entity, a transmission resource and a scheduling function that provide a service for the terminal are managed and controlled by the SMF entity.

PCF entity: mainly provides a unified policy framework to control network behavior, provides a policy rule for a network function at a control layer, and is responsible for obtaining user subscription information related to policy decision.

UDM entity: is mainly used to manage the user subscription information.

AF entity: mainly supports interaction with a 3GPP network to provide a service, for example, influencing data routing decision and a policy control function, or providing some business services for a network side (these services may or may not be provided by a 3^{rd} party (3^{rd} party)).

It should be noted that the foregoing function entities are only names, and the names do not constitute a limitation on the entities. For example, the session management function entity may also be replaced with a "session management function" or another name. In addition, the session management function entity may also correspond to an entity that includes another function in addition to the session management function. The user plane function entity may also be replaced with a "user plane function" or another name. In addition, the user plane function entity may also correspond to an entity that includes another function in addition to the user plane function. A unified description is provided herein, and details are not described below.

The terminal accesses the network by using a radio access network (radio access network, RAN) device or an access network (access network, AN) device. The RAN device is mainly a wireless network device in a 3GPP network, and the AN may be an access network device defined in non-3GPP.

By way of example rather than limitation, the terminal in this embodiment of this application may be an access terminal, a subscriber unit, a subscriber station, a mobile station, a mobile console, a relay station, a remote station, a remote terminal, a mobile device, a user terminal (user terminal), user equipment (user equipment, UE), terminal equipment (terminal equipment), a wireless communications device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved public land mobile network (public land mobile network, PLMN), a terminal in a future internet of vehicles, or the like. This is not limited in this embodiment of this application.

By way of example rather than limitation, in this embodiment of this application, the terminal may be a mobile phone, a tablet computer, a computer having wireless receiving and sending functions, a virtual reality terminal, an augmented reality terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like.

By way of example rather than limitation, in this embodiment of this application, the wearable device may also be referred to as a wearable intelligent device, and is a general term of wearable devices developed by intelligently designing daily wear by using a wearable technology, such as glasses, gloves, a watch, clothing, and shoes. The wearable device is a portable device that is directly worn on a body or integrated into clothes or an accessory of a user. The wearable device is not merely a hardware device, but is used to implement a powerful function through software support, data interaction, and cloud interaction. In a board sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in this embodiment of this application, the terminal may alternatively be a terminal in an IoT system. The IoT is an important component of future information technology development. A main technical feature of the IoT is that an object is connected to a network by using a communications technology, to implement an intelligent network of human-computer interconnection and object-object interconnection. In this embodiment of this application, the IoT technology may implement mass connection, deep coverage, and terminal power saving by using, for example, a narrowband (narrowband, NB) technology.

In addition, in this embodiment of this application, the terminal may further include a sensor such as an intelligent printer, a train detector, and a gas station. Main functions of the sensor include collecting data (for some terminals), receiving control information and downlink data of the access network device, and sending an electromagnetic wave to transmit uplink data to the access network device.

Optionally, the access network device in this embodiment of this application may be any communications device that is configured to communicate with the terminal and that has wireless receiving and sending functions. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

In some deployment, the gNB may include a central unit (central unit, CU) and the DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the access network device may be a device including one or more of a CU node, a DU node, or an AAU node.

Optionally, in this embodiment of this application, communication between the access network device and the terminal may be performed by using a licensed spectrum, may be performed by using an unlicensed spectrum, or may be performed by using both a licensed spectrum and an unlicensed spectrum. Communication between the access network device and the terminal may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used between the access network device and the terminal 101 is not limited in this embodiment of this application.

Optionally, the terminal, the access network device, and the core network device in this embodiment of this application may be deployed on land, including indoors, outdoors, handheld, or vehicle-mounted; or may be deployed on water; or may be deployed on an airplane, a balloon, and a satellite in the air. Application scenarios of the terminal, the access network device, and the core network device are not limited in this embodiment of this application.

Optionally, in this embodiment of this application, the terminal, the access network device, and the core network device include a hardware layer, an operating system layer that runs on the hardware layer, and an application layer that runs on the operating system layer. The hardware layer includes hardware such as a central processing unit (central processing unit, CPU), a memory management unit (memory management unit, MNW), and a memory (also referred to as a main memory). An operating system may be any one or more computer operating systems that implement service processing through a process (process), for example, a Linux operating system, a UNIX operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal or the access network device, or a function module that can invoke and execute the program in the terminal or the access network device.

In other words, related functions of the terminal, the access network device, and the core network device in this embodiment of this application may be implemented by one device, may be jointly implemented by a plurality of devices, or may be implemented by one or more function modules in one device. This is not specifically limited in this embodiment of this application. It may be understood that the foregoing function may be a network element in a hardware device, or may be a software function running on dedicated hardware, or a combination of hardware and software, or a virtualization function instantiated on a platform (for example, a cloud platform).

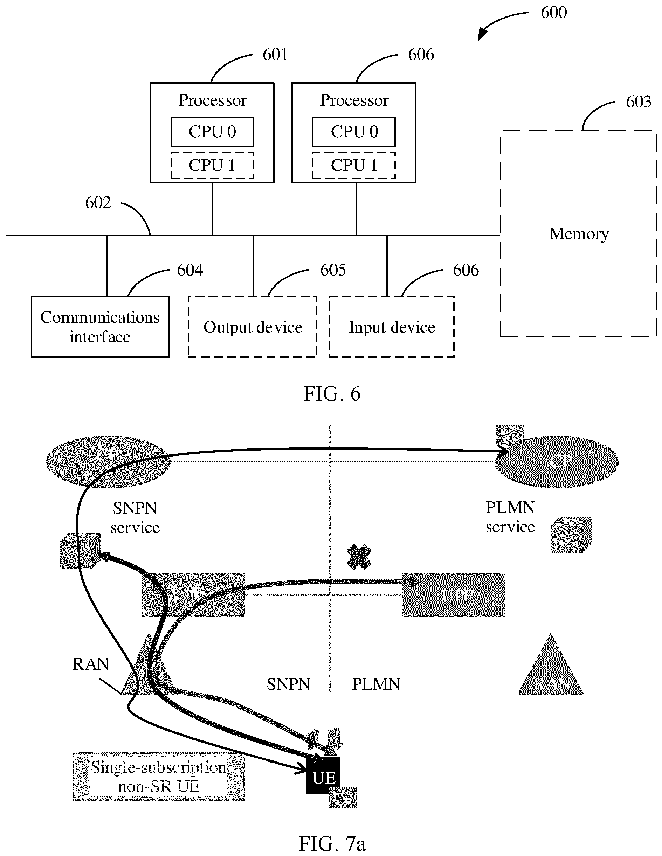

For example, the related functions of the terminal, the access network device, and the core network device in this embodiment of this application may be implemented by a communications apparatus 600 in FIG. 6. FIG. 6 is a schematic diagram of a structure of a communications apparatus 600 according to an embodiment of this application. The communications apparatus 600 includes one or more processors 601, a communications line 602, and at least one communications interface (in FIG. 6, merely an example in which a communications interface 604 and one processor 601 are included is used for illustration). Optionally, a memory 603 may be further included.

The processor 601 may be a central processing unit (central processing unit, CPU), a microprocessor, an application-specific integrated circuit (application-specific integrated circuit, ASIC), or one or more integrated circuits configured to control program execution of the solutions in this application.

The communications line 602 may include a path for connecting different components.

The communications interface 604 may be a transceiver module, configured to communicate with another device or a communications network, such as an Ethernet, a RAN, or a wireless local area network (wireless local area network, WLAN). For example, the transceiver module may be an apparatus such as a transceiver. Optionally, the communications interface 604 may alternatively be a transceiver circuit located in the processor 601, to implement signal input and signal output of the processor.

The memory 603 may be an apparatus having a storage function. For example, the memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory 603 is not limited thereto. The memory may exist independently, and is connected to the processor through the communications line 602. Alternatively, the memory may be integrated with the processor.

The memory 603 is configured to store computer-executable instructions for performing the solutions in this application, and the processor 601 controls execution. The processor 601 is configured to execute the computer-executable instructions stored in the memory 603, to implement a method for a terminal to access public and private networks provided in the embodiments of this application.

Alternatively, in this embodiment of this application, the processor 601 may perform a processing-related function in a method for a terminal to access public and private networks provided in the following embodiments of this application. The communications interface 604 is responsible for communicating with another device or a communications network. This is not specifically limited in this embodiment of this application.

The computer-executable instructions in this embodiment of this application may also be referred to as application program code. This is not specifically limited in this embodiment of this application.

During specific implementation, in an embodiment, the processor 601 may include one or more CPUs, such as a CPU 0 and a CPU 1 in FIG. 6.

During specific implementation, in an embodiment, the communications apparatus 600 may include a plurality of processors, such as the processor 601 and a processor 606 in FIG. 6. Each of the processors may be a single-core (single-CPU) processor or a multi-core (multi-CPU) processor. Herein, the processor may be one or more devices, circuits, and/or processing cores configured to process data (for example, computer program instructions).

During specific implementation, in an embodiment, the communications apparatus 600 may further include an output device 605 and an input device 606. The output device 605 communicates with the processor 601, and may display information in a plurality of manners.

The communications apparatus 600 may be a general-purpose apparatus or a dedicated apparatus. For example, the communications apparatus 600 may be a desktop computer, a portable computer, a network server, a personal digital assistant (personal digital assistant, PDA), a mobile phone, a tablet computer, a wireless terminal, an embedded device, or a device having a structure similar to the structure shown in FIG. 6. A type of the communications apparatus 600 is not limited in this embodiment of this application.

The solutions in this application may be implemented based on an architecture shown in FIG. 3. The architecture implements interworking between an SNPN network and a PLMN network by using a roaming architecture. That is, the terminal subscribes only to the PLMN network, that is, has a single subscription. The terminal uses a public network subscription of the PLMN to select an SNPN ID to access an SNPN base station, registers with the SNPN network, and establishes a PDU session in the SNPN. The SNPN network may further determine an LBO/HR mode based on the public network subscription of the terminal, to establish the PDU session. The LBO mode means that the terminal establishes, in the SNPN, a PDU session anchored to the SNPN network. The HR mode means that the terminal may establish, in the SNPN network, a PDU session anchored to the PLMN network.

With reference to the architecture that implements interworking between an SNPN network and a PLMN network, the following describes an example application scenario to which the solutions in this application are applicable.

For example, the solutions in this application may be applied to a video, image, and audio professional application (video, image, audio professional application, VIAPA) scenario. The VIAPA scenario may be, for example, a large concert site, on which an SNPN private network needs to be deployed, and a mobile phone device accesses the private network when accessing the PLMN, to enjoy a high-quality 3D sound effect. In this way, the mobile phone device can receive broadcast data from the NPN, and can also receive data or paging from the PLMN. The VIAPA scenario may alternatively be, for example, an event live broadcast site, on which an SNPN private network needs to be deployed. In this way, a reporter may collect news materials by using a device, and feed back the materials to a news broadcasting center by using the PLMN and the NPN, to produce content of a live broadcast program. If an event site has a large area, for example, an event site such as racing, a marathon, a military parade, and a triathlon, a private network cannot cover the event site, and in this case, the PLMN needs to be used to cover the event site, to supplement the private network. A device needs to subscribe to both the PLMN and the private network, so that the device can simultaneously access the PLMN and the private network. In addition, a service stream is switched/allocated between the PLMN and the NPN, to ensure service continuity. Therefore, when a private network is used in such a VIAPA scenario, service continuity and service accessibility across public and private networks need to be supported.

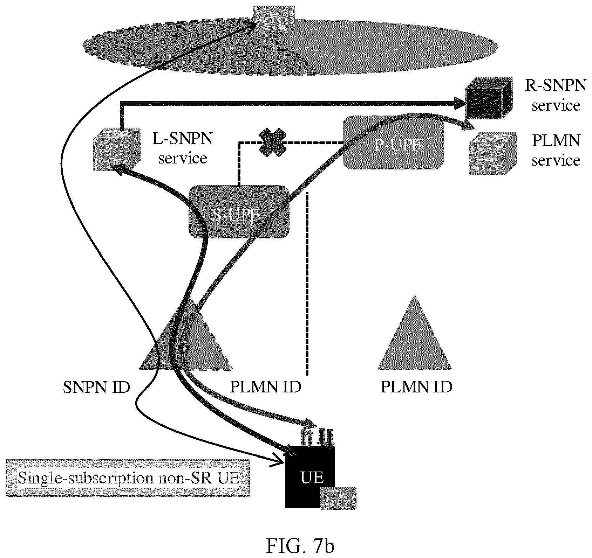

The architecture, shown in FIG. 3, that implements interworking between an SNPN network and a PLMN network by using a roaming architecture may be further classified into two architectures shown in FIG. 7a and FIG. 7b, based on whether the SNPN network and the PLMN network share a control plane (control plane, CP). FIG. 7a is a schematic diagram of an architecture in which an SNPN network and a PLMN network each use an independent control plane. That is, the SNPN network and the PLMN network each have an independent set of core network elements. Data cannot be shared between UPFs of the SNPN network and the PLMN network, so that the data is isolated, thereby improving data security. A terminal in the SNPN network communicates with an access network device and a core network device of the SNPN network, and CPs of the SNPN network and the PLMN network may communicate with each other to share control information. The architecture shown in FIG. 7a may be applied to an enterprise private network, such as a factory workshop and an enterprise campus. In these application scenarios, data of the private network needs to be isolated from the public network, to improve data security. Therefore, the SNPN network requires an independent core network. A device may roam in the SNPN network, and perform 3GPP registration in a home public land mobile network (home public land mobile network, HPLMN). An LBO session is used to perform an enterprise private network service. The device is prohibited from accessing the enterprise private network when being moved out of a factory. An HR session is used to perform a public network service, so that the device maintains session continuity when being moved out of the factory.

FIG. 7b is a schematic diagram of an architecture in which an SNPN network and a PLMN network share a control plane. The SNPN network and the PLMN network may share the control plane, that is, the SNPN network and the PLMN network share some or all network elements in a core network. Depending on deployment, a UPF (S-UPF) of the SNPN network and a UPF (P-UPF) of the PLMN network can or cannot communicate with each other. Data of the SNPN network may be stored in a local server (L-SNPN services), or may be stored in a cloud SNPN server (R-SNPN services). The cloud SNPN server may be accessed by using the SNPN network and the PLMN network. The architecture shown in FIG. 7b may be applied to a non-enterprise scenario, such as a live performance point-to-point (Ad-hoc) private network service (for example, a concert, an evening, a live event, and an international conference) or a public private network service (for example, a shopping mall, a container wharf, a logistics warehouse, a residential area, a school, and a cultural festival). The SNPN does not require data security/isolation, monitoring and charging, or transmission differentiation. The SNPN does not require an independent CP, and may share the core network with the PLMN. A device performs 3GPP registration in the PLMN by using an SNPN base station, and uses the UPF of the private network to perform a local private network service. When being moved out of a coverage area of the private network, the device uses the UPF of the public network to access private network service data in a cloud. The device uses the UPF of the public network to access a PLMN service, and may maintain service continuity when being moved out of the PLMN.

However, for a device that accesses a private network by using a PLMN subscription, a related implementation solution about whether the device is allowed to use a private network base station resource to perform a public network service is not provided at present.

In addition, radio access capabilities of the terminal are classified into four capabilities: single-receive single-transmit, dual-receive single-transmit, dual-receive time division dual-transmit, and dual-receive dual-transmit. Single-receive means that a signal can only be received at an air interface of one system at a same moment. Dual-receive means that signals can be received at air interfaces of two systems at a same moment. Single-transmit means that a signal can only be transmitted at an air interface of one system at a same moment. Dual-transmit means that signals can be transmitted at air interfaces of two systems at a same moment. Time division dual-transmit means that signals can be transmitted at air interfaces of two systems switched at different moments. A single-receive single-transmit terminal is generally referred to as single radio (single radio, SR) UE, and a terminal with another capability is referred to as dual radio (dual radio, DR) UE. However, in the architecture shown in FIG. 3, even if the terminal is DR UE, if the terminal performs registration only once in the SNPN, the terminal can only use a private network base station to establish a session, and cannot simultaneously access a public network service and a private network service, and a dual radio capability of the terminal cannot be fully activated.

With reference to FIG. 1 to FIG. 15C, the following specifically describes the method for a terminal to access public and private networks provided in the embodiments of this application.

It should be noted that names of messages between network elements, names of parameters in the messages, or the like in the following embodiments of this application are merely examples, and there may be other names during specific implementation. This is not specifically limited in embodiments of this application.

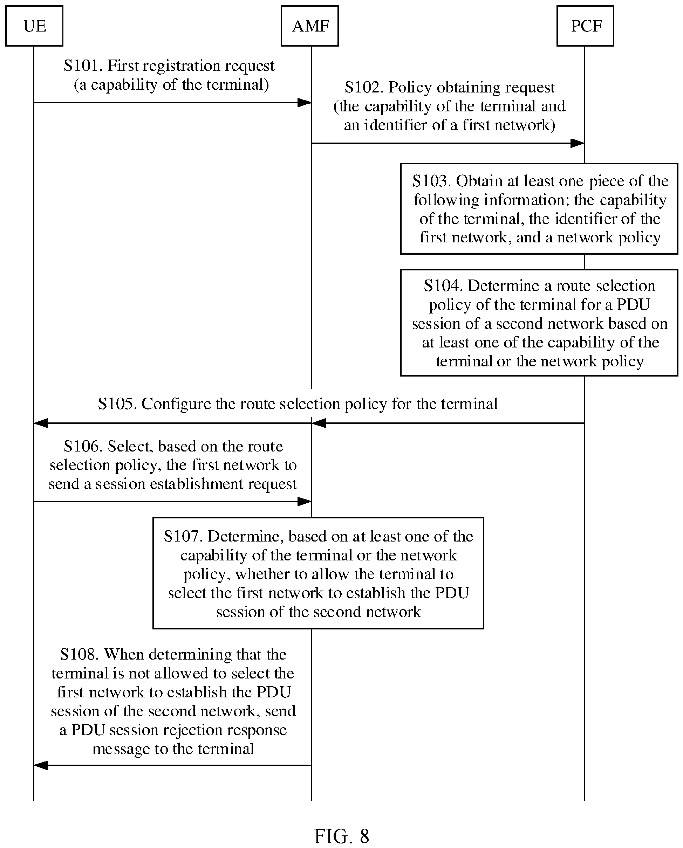

Based on the architecture shown in FIG. 3, an embodiment of this application provides a method for a terminal to access public and private networks. The terminal subscribes only to a second network. FIG. 8 is a schematic flowchart of a method for a terminal to access public and private networks according to an embodiment of this application. It should be noted that this embodiment may be applied to the architecture, shown in FIG. 7a, in which a first network and a second network each use an independent control plane. In this case, an AMF and a PCF in this embodiment are network elements in the first network. This embodiment may also be applied to the architecture, shown in FIG. 7b, in which a first network and a second network share a control plane. In this case, the AMF and the PCF in this embodiment are network elements in the first network/second network. For example, the method may include the following steps:
S101. The terminal sends a first registration request to the AMF. The first registration request is used to request registration of the terminal in the first network. Registration of the terminal in the first network means that the terminal registers with the first network by using a subscription of the terminal, so that the first network can authenticate the terminal, to perform subsequent communication with the authenticated terminal.

In an implementation, the first registration request includes a capability of the terminal, and may further include an identifier of the terminal. The identifier of the terminal may be a permanent identifier of the terminal, for example, a subscription permanent identifier (subscription permanent identifier, SUPI)/subscription concealed identifier (subscription concealed identifier, SUCI).

In another implementation, the terminal further sends a radio resource control (radio resource control, RRC) message to the AMF, where the RRC message includes a capability of the terminal. The capability of the terminal includes supporting single radio by the terminal or supporting dual radio by the terminal.

S102. After receiving the first registration request, the AMF sends a policy obtaining request to the PCF. The policy obtaining request is used to request to obtain a network policy of the PCF. The policy obtaining request includes the capability of the terminal and an identifier of the first network. The identifier of the first network may be an SNPN ID. The SNPN ID is a PLMN ID and an NID.

Optionally, before sending the policy obtaining request to the PCF, the AMF may further send a subscription data obtaining request to a UDM of the second network, to obtain user subscription data. In this case, the policy obtaining request further includes the user subscription data.

S103. The PCF obtains at least one piece of the following information: the capability of the terminal and the network policy.

Specifically, after receiving the policy obtaining request, the PCF obtains the capability of the terminal in the policy obtaining request and a network policy of the first network. The network policy of the first network is used to indicate that the first network allows or prohibits the terminal from selecting the first network to establish a protocol data unit (protocol data unit, PDU) session of the second network. In addition, the PCF may further obtain a network policy of the second network. The network policy of the second network is used to indicate that the second network allows or prohibits the terminal from performing 3GPP registration twice in the second network by using a same subscription. The second network is a home network of the terminal. The network policy includes the network policy of the first network and/or the network policy of the second network. In addition, it is assumed that there is more than one first network. In this case, the local PCF or a cloud server may store network policies of more than one first network. The network policy of the first network corresponds to the identifier of the first network. Therefore, the PCF may further obtain the identifier of the first network, and obtain a network policy of a corresponding first network based on the identifier of the first network.

S104. The PCF determines a route selection policy (UE route selection policy, URSP) of the terminal for the PDU session of the second network based on at least one of the capability of the terminal or the network policy.

The route selection policy refers to whether to select the first network or the second network to establish the PDU session of the second network when the terminal establishes the PDU session of the second network. In this embodiment, the terminal subscribes only to the second network, and the terminal needs to select whether to establish the PDU session of the second network by using the first network. Therefore, the route selection policy is used to indicate whether the terminal selects the first network to establish the PDU session of the second network.

Specifically, that the PCF determines a route selection policy of the terminal for the PDU session of the second network based on at least one of the capability of the terminal or the network policy specifically includes the following cases:
In one case, the terminal supports dual radio, and the terminal is allowed to perform 3GPP registration twice in the second network by using a same subscription. In this case, it is determined that the route selection policy is rejecting selection of the first network by the terminal to establish the PDU session of the second network. That is, the capability of the terminal supports dual radio and supports simultaneous communication with two network systems, and the second network allows the terminal to perform 3 GPP registration twice in the second network by using a same subscription. Therefore, the PDU session of the second network does not need to be established by using the first network. In this case, the PCF determines that the route selection policy is rejecting selection of the first network by the terminal to establish the PDU session of the second network.

In another case, the terminal supports dual radio, the terminal is prohibited from registering with the second network twice by using a same subscription, and the terminal is prohibited from selecting the first network to establish the PDU session of the second network. In this case, the terminal cannot register with the second network again, and the first network prohibits the terminal from selecting the first network to establish the PDU session of the second network. Accordingly, it is determined that the route selection policy is rejecting selection of the first network by the terminal to establish the PDU session of the second network.

In still another case, the terminal supports dual radio, the terminal is prohibited from registering with the second network twice by using a same subscription, and the terminal is allowed to select the first network to establish the PDU session of the second network. In this case, it is determined that the route selection policy is rejecting selection of the first network by the terminal to establish the PDU session of the second network. That is, although the terminal supports dual radio, and the first network allows the terminal to establish the PDU session of the second network, the network policy of the second network is preferentially considered to prohibit the terminal from registering with the second network twice by using a same subscription. This conflicts with the capability of the terminal and the network policy of the first network. Therefore, it is determined that the route selection policy is rejecting selection of the first network by the terminal to establish the PDU session of the second network.

In still another case, the terminal supports dual radio, the terminal is prohibited from registering with the second network twice by using a same subscription, and the terminal is allowed to select the first network to establish the PDU session of the second network. In this case, it is determined that the route selection policy is allowing the terminal to select the first network to establish the PDU session of the second network. That is, the terminal supports dual radio, and the first network allows the terminal to establish the PDU session of the second network. Even if the network policy of the second network is prohibiting the terminal from registering with the second network twice by using a same subscription, that the first network allows the terminal to select the first network to establish the PDU session of the second network is preferentially considered. Therefore, it is determined that the route selection policy is rejecting selection of the first network by the terminal to establish the PDU session of the second network.

In still another case, the terminal supports single radio, and the terminal is prohibited from selecting the first network to establish the PDU session of the second network. In this case, it is determined that the route selection policy is rejecting selection of the first network by the terminal to establish the PDU session of the second network. That is, the capability of the terminal supports only single radio, but the network policy (especially the network policy of the first network) prohibits the terminal from selecting the first network to establish the PDU session of the second network. In this case, the PCF determines that the route selection policy is rejecting selection of the first network by the terminal to establish the PDU session of the second network.

In still another case, the terminal supports single radio, and the terminal is allowed to select the first network to establish the PDU session of the second network. In this case, it is determined that the terminal is allowed to select the first network to establish the PDU session of the second network. That is, the capability of the terminal supports only single radio, but the network policy (especially the network policy of the first network) allows the terminal to select the first network to establish the PDU session of the second network. In this case, the PCF determines that the route selection policy is allowing the terminal to select the first network to establish the PDU session of the second network.

S105. The PCF configures the route selection policy for the terminal by using the AMF.

Specifically, the PCF may configure the route selection policy for the terminal by using a UE policy update (UE policy update, UCU) process.

In addition, the PCF further sends a policy obtaining response to the AMF, where the policy obtaining response includes the network policy.

S106. The terminal selects, based on the route selection policy, the first network to send a session establishment request, where the session establishment request is used to request to establish the PDU session of the second network by using the first network.

After receiving the route selection policy, the terminal selects, based on the route selection policy, the first network to establish the PDU session of the second network. Specifically, based on the route selection policy, the terminal sends the session establishment request to the AMF by using a RAN of an SNPN. The session establishment request includes at least one of the following parameters: a data network identifier (data network identifier, DNN) and slice information (for example, single network slice selection assistance information (single network slice selection assistance information, S-NSSAI)). The at least one parameter is used to indicate to establish the PDU session of the second network.

Further, the terminal may further determine, based on the route selection policy and a local configuration, whether to select the first network to establish the PDU session of the second network. The local configuration stores a preset or received route selection policy. For example, if the route selection policy is prohibiting the terminal from selecting the first network to establish the PDU session of the second network, but an existing local configuration of the terminal is allowing the terminal to select the first network to establish the PDU session of the second network, the terminal may still send the session establishment request to the first network, to request to establish the PDU session of the second network by using the first network. Certainly, generally, the session establishment request may be rejected.

S107. After receiving the session establishment request, the AMF determines, based on at least one of the capability of the terminal or the network policy, whether to allow the terminal to select the first network to establish the PDU session of the second network.

After receiving the session establishment request, the AMF parses out that the terminal is to establish the PDU session of the second network by using the first network, and may determine, based on at least one of the capability of the terminal or the network policy in a manner similar to the manner of determining the route selection policy, whether to allow the terminal to select the first network to establish the PDU session of the second network.

S 108. When determining, based on at least one of the capability of the terminal or the network policy, that the terminal is not allowed to select the first network to establish the PDU session of the second network, the AMF sends a PDU session rejection response message to the terminal, where the PDU session rejection response message includes a rejection reason, and the rejection reason is used to indicate that establishment of the PDU session of the second network by using the first network is rejected.

The terminal receives the PDU session rejection response message. Further, the terminal skips, based on the rejection reason, selecting the first network to request to establish the PDU session of the second network; or starts a timer, and skips, in a timing time, selecting the first network to request to establish the PDU session of the second network; or updates the local configuration of the terminal, that is, deletes the stored route selection policy.

In an alternative manner of step S108, when determining, based on at least one of the capability of the terminal or the network policy, that the terminal is allowed to select the first network to establish the PDU session of the second network, the AMF sends a PDU session establishment response message to the terminal.

According to the method for a terminal to access public and private networks provided in this embodiment of this application, when the terminal registers with the first network, a policy management network element of the first network configures, for the terminal, the route selection policy of the terminal for the PDU session of the second network, and the terminal may select, based on the route selection policy, the first network to establish the PDU session of the second network. In this way, with permission of the first network, the terminal may select the first network to establish the PDU session of the second network.

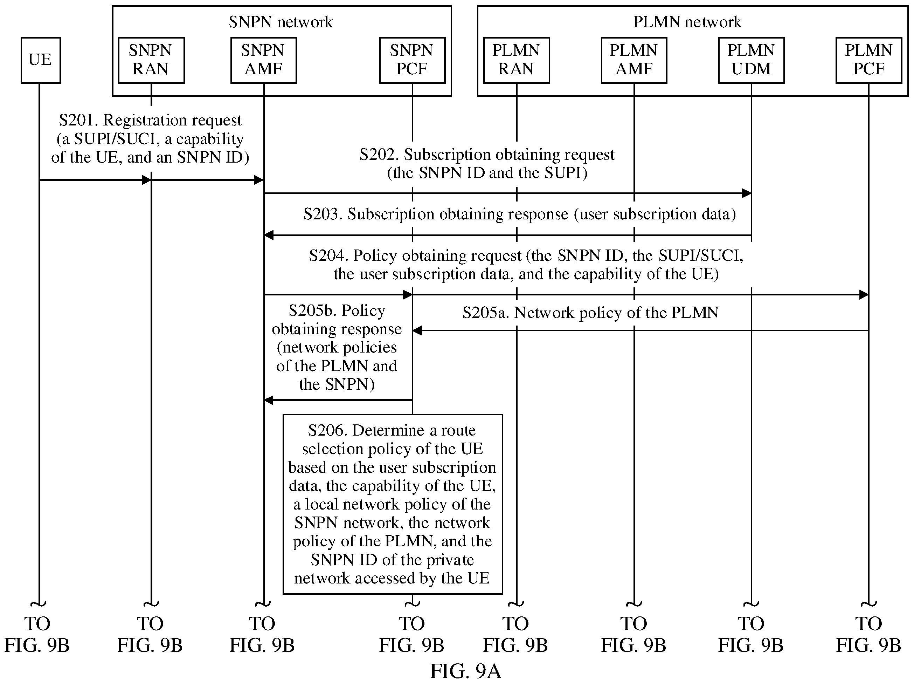

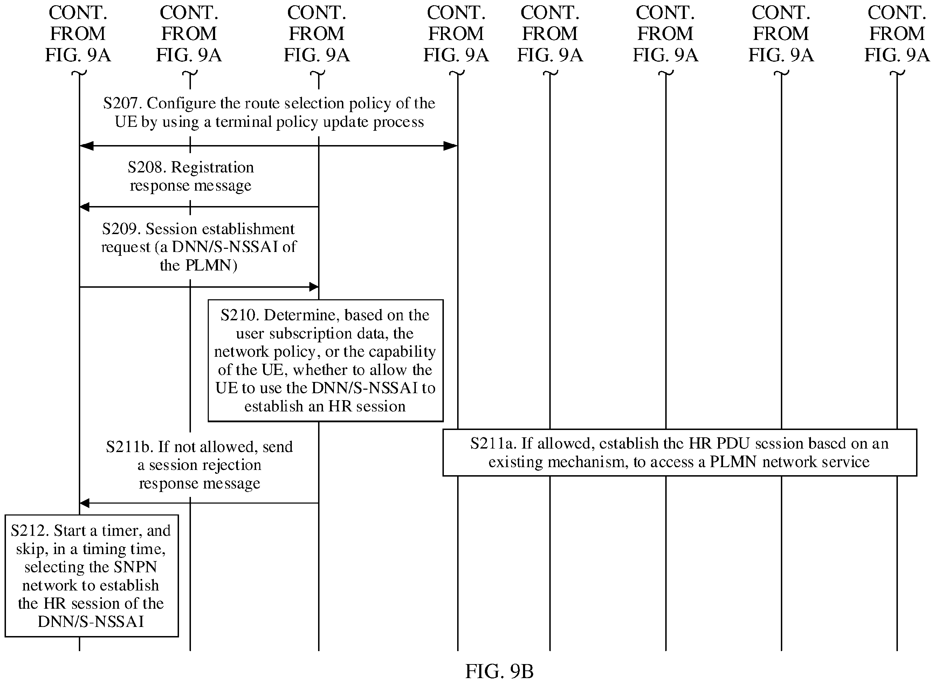

Specifically, based on the architecture, shown in FIG. 7a, in which an SNPN network and a PLMN network each use an independent control plane, that is, the SNPN network and the PLMN network each use an independent core network element, as shown in FIG. 9A and FIG. 9B, an embodiment of this application provides another schematic flowchart of a method for a terminal to access public and private networks. For example, the method may include the following steps:
S201. UE sends a registration request to an SNPN AMF by using an SNPN RAN.

Correspondingly, the SNPN AMF receives the registration request of the UE.

The registration request is used to request registration in an SNPN network. The registration request carries a permanent identifier of the UE, for example, a SUPI/SUCI, and a capability of the UE. The SUPI/SUCI of the UE includes an HPLMN ID of the UE. The SNPN AMF may further receive an SNPN ID from the SNPN RAN. The capability of the UE includes the following information: supporting SR or DR. The SNPN ID is a PLMN ID and an NID.

S202. The SNPN AMF sends a subscription obtaining request to a PLMN UDM.

Correspondingly, the PLMN UDM receives the subscription obtaining request.

The subscription obtaining request is used to request to obtain user subscription data of the UE in a PLMN. The subscription obtaining request carries the SNPN ID and the SUPI of the UE.

S203. The PLMN UDM sends a subscription obtaining response to the SNPN AMF.

The SNPN AMF receives the subscription obtaining response, where the subscription obtaining response includes the user subscription data. The user subscription data includes the following information: a DNN/S-NSSAI available when the user accesses the SNPN and the PLMN. Specifically, the user subscription data includes an LBO DNN/S-NSSAI and/or an HR DNN/S-NSSAI. The HR DNN/S-NSSAI is a DNN/S-NSSAI available when the user accesses the PLMN.

S204. The SNPN AMF sends a policy obtaining request to an SNPN PCF (or referred to as a roaming policy control function (roaming policy control function, V-PCF) entity). The SNPN PCF forwards the policy obtaining request to a PLMN PCF.

Correspondingly, the PLMN PCF receives the policy obtaining request.

The policy obtaining request is used to request to obtain network policies of the SNPN network and the PLMN network. The policy obtaining request carries information such as the SNPN ID, the SUPI of the UE, the user subscription data, and the capability of the UE.

S205a. The PLMN PCF sends a network policy of the PLMN to the SNPN PCF.

Correspondingly, the SNPN PCF receives the network policy of the PLMN. The network policy of the PLMN is used to indicate that the PLMN network allows or prohibits the terminal from establishing a PDU session of the PLMN network.

S205b. The SNPN PCF sends a policy obtaining response to the SNPN AMF.

Correspondingly, the SNPN AMF receives the policy obtaining response.

The policy obtaining response includes network policies. Specifically, the network policies include a local network policy of the SNPN network and the network policy of the PLMN. The network policy of the SNPN network is used to indicate that the terminal is allowed or prohibited from selecting the SNPN network to establish the PDU session of the PLMN network. The network policy of the PLMN is used to indicate that the terminal is allowed or prohibited from performing 3GPP registration twice in the second network by using a same subscription. The local network policy of the SNPN network and the network policy of the PLMN may be consistent or may conflict with each other.

S206. The SNPN PCF determines a URSP based on at least one of the user subscription data, the capability of the UE, or the network policy.

For specific implementation of this step, refer to step S104 in the embodiment shown in FIG. 8.

Further, the SNPN PCF may further determine the URSP based on the user subscription data. Specifically, if the user subscription data does not include the DNN/S-NSSAI available when the user accesses the PLMN, the SNPN PCF determines to reject selection of the first network by the UE to establish the PDU session of the second network.

It may be understood that, if the SNPN PCF does not obtain the user subscription data from the policy obtaining request message, the SNPN PCF may further query a PLMN UDR by using the PLMN PCF, to obtain the user subscription data.

S207. The SNPN PCF configures the URSP for the UE by using a UE policy update (UE policy update, UCU) process.

S208. The SNPN AMF sends a registration response message to the UE.

Correspondingly, the UE receives the registration response message.

The registration response message is used to indicate whether the UE successfully registers with the SNPN network or fails to register with the SNPN network.

S209. The UE sends a session establishment request to the SNPN AMF.

Correspondingly, the SNPN AMF receives the session establishment request.

Specifically, based on the URSP configured in step S207 or a local configuration (if the URSP configured by the SNPN PCF is not received), the UE selects the SNPN network to establish a PDU session of the DNN/S-NSSAI for accessing the PLMN, and sends a session establishment request to the SNPN AMF. The session establishment request is used to request to establish an HR session, that is, establish, by using the SNPN network, a session connection anchored to a PLMN UPF. The session establishment request carries the DNN/S-NSSAI available during access to the PLMN.

S210. The SNPN AMF determines, based on at least one of the user subscription data, the network policy, or the capability of the UE, whether to allow the UE to use the DNN/S-NSSAI to establish the HR session.

For specific implementation of this step, refer to step S108 in the embodiment shown in FIG. 8.

Further, the SNPN AMF may further determine, based on the user subscription data, whether to allow the UE to establish the HR session. Specifically, if the user subscription data changes, and the UE is not allowed to use the DNN/S-NSSAI to establish the HR session, the SNPN AMF determines not to allow the UE to establish the HR session.

S211a. If the SNPN AMF determines to allow the UE to use the DNN/S-NSSAI to establish the HR session, establish the HR PDU session based on an existing mechanism, to access a PLMN network service.

S211b. If the SNPN AMF determines not to allow the UE to use the DNN/S-NSSAI to establish the HR session, the SNPN AMF sends a session rejection response message to the UE.

Correspondingly, the UE receives the session rejection response message.

The session rejection response message is used to indicate that the session establishment request is rejected, and carries a rejection reason. The rejection reason is used to indicate that the DNN/S-NSSAI is not allowed by the SNPN network (DNN/S-NSSAI not allowed for SNPN). That is, the SNPN PCF does not allow the UE to use the DNN/S-NSSAI to establish the HR session.

S212. The UE receives the session rejection response message, and starts a timer based on the rejection reason carried in the session rejection response message, that is, skips, in a timing time of the timer, selecting the SNPN network to establish the PDU session of the DNN/S-NSSAI.

According to the method for a terminal to access public and private networks provided in this embodiment of this application, when the terminal registers with the SNPN network, a policy management network element of the SNPN network configures, for the terminal, the route selection policy of the terminal for the PDU session of the PLMN network, and the terminal may select, based on the route selection policy, the SNPN network to establish the PDU session of the PLMN network. In this way, with permission of the SNPN network, the terminal may select the SNPN network to establish the PDU session of the PLMN network.

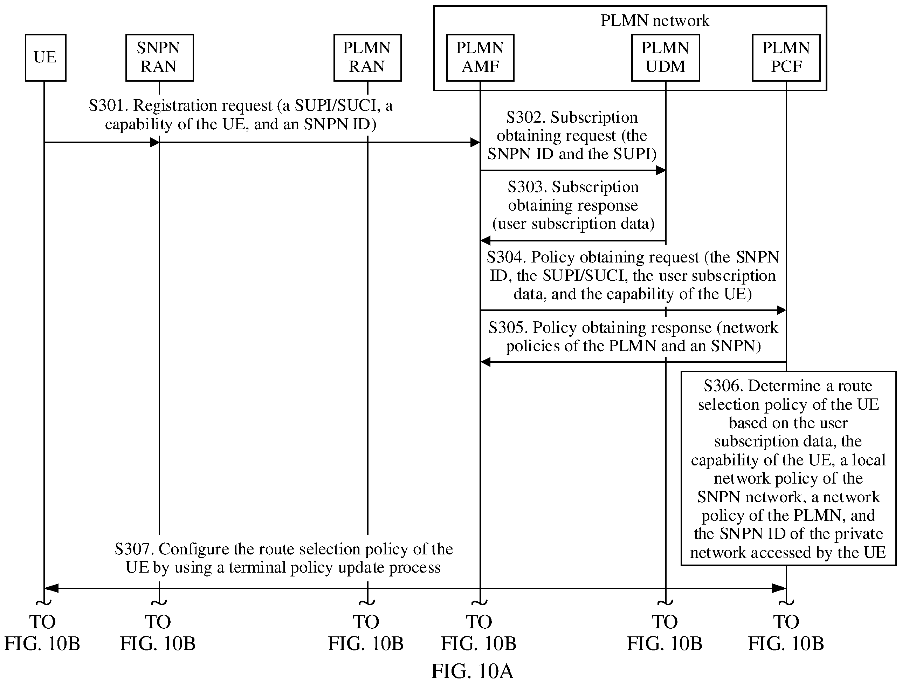

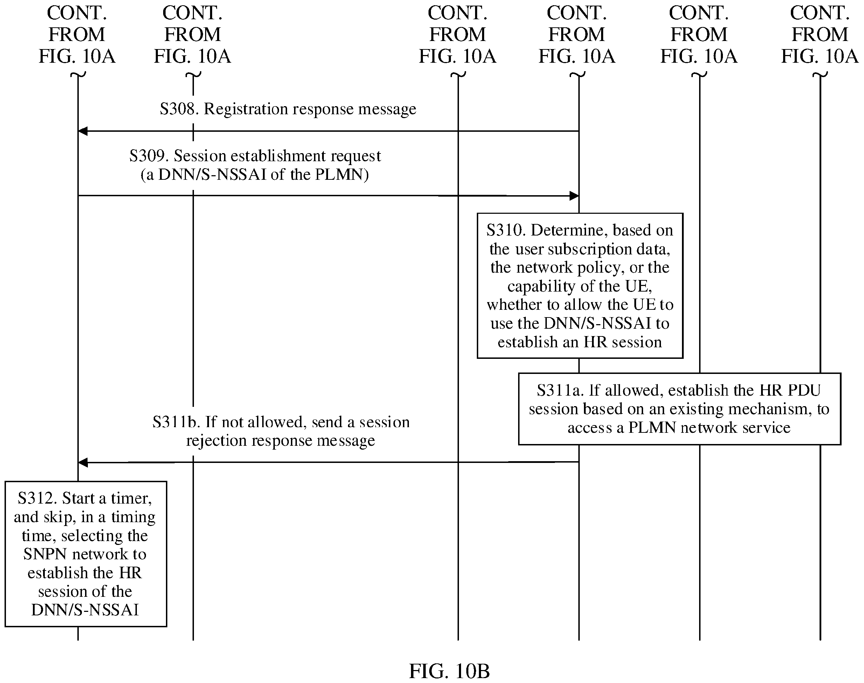

As shown in FIG. 10A and FIG. 10B, an embodiment of this application provides another schematic flowchart of a method for a terminal to access public and private networks. Different from the embodiment shown in FIG. 9A and FIG. 9B, this embodiment is based on the architecture, shown in FIG. 7b, in which an SNPN network and a PLMN network share a control plane, that is, the SNPN network and the PLMN network share a set of core network elements. For example, the method may include the following steps:

S301. UE sends a registration request to an AMF by using an SNPN RAN.

Correspondingly, the AMF receives the registration request of the UE.

For specific implementation of this step, refer to step S201 in the embodiment shown in FIG. 9A. A difference is that in this embodiment, the AMF is located in a PLMN network, and is shared by an SNPN network and the PLMN network.

S302. The AMF sends a subscription obtaining request to a PLMN UDM.

Correspondingly, the PLMN UDM receives the subscription obtaining request.

For specific implementation of this step, refer to step S202 in the embodiment shown in FIG. 9A.

S303. The PLMN UDM sends a subscription obtaining response to the AMF.

For specific implementation of this step, refer to step S203 in the embodiment shown in FIG. 9A.

S304. The AMF sends a policy obtaining request to a PCF.

Correspondingly, the PCF receives the policy obtaining request.

For specific implementation of this step, refer to step S204 in the embodiment shown in FIG. 9A.

S305. The PCF sends a policy obtaining response to the AMF.

Correspondingly, the AMF receives the policy obtaining response.

For specific implementation of this step, refer to steps S205a and S205b in the embodiment shown in FIG. 9A.

S306. The PCF determines a URSP based on at least one of user subscription data, a capability of the UE, or a network policy.

For specific implementation of this step, refer to step S206 in the embodiment shown in FIG. 9A.

S307. The PCF configures the URSP for the UE by using a UCU process.

For specific implementation of this step, refer to step S207 in the embodiment shown in FIG. 9B.

S308. The AMF sends a registration response message to the UE.

Correspondingly, the UE receives the registration response message.

For specific implementation of this step, refer to step S208 in the embodiment shown in FIG. 9B.

S309. The UE sends a session establishment request to the AMF.

Correspondingly, the AMF receives the session establishment request.

For specific implementation of this step, refer to step S209 in the embodiment shown in FIG. 9B.

S310. The AMF determines, based on at least one of the user subscription data, the network policy, or the capability of the UE, whether to allow the UE to use the DNN/S-NSSAI to establish an HR session.

For specific implementation of this step, refer to step S210 in the embodiment shown in FIG. 9B.

S311a. If the AMF determines to allow the UE to use the DNN/S-NSSAI to establish the HR session, establish the HR PDU session based on an existing mechanism, to access a PLMN network service.

S311b. If the AMF determines not to allow the UE to use the DNN/S-NS SAI to establish the HR session, the AMF sends a session rejection response message to the UE.

Correspondingly, the UE receives the session rejection response message.

For specific implementation of this step, refer to step S211b in the embodiment shown in FIG. 9B.

S312. The UE receives the session rejection response message, and starts a timer based on a rejection reason carried in the session rejection response message, that is, skips, in a timing time of the timer, selecting the SNPN network to establish the PDU session of the DNN/S-NSSAI.

For specific implementation of this step, refer to step S212 in the embodiment shown in FIG. 9B.

According to the method for a terminal to access public and private networks provided in this embodiment of this application, when the terminal registers with the SNPN network, a policy management network element of the SNPN network configures, for the terminal, the route selection policy of the terminal for the PDU session of the PLMN network, and the terminal may select, based on the route selection policy, the SNPN network to establish the PDU session of the PLMN network. In this way, with permission of the SNPN network, the terminal may select the SNPN network to establish the PDU session of the PLMN network.

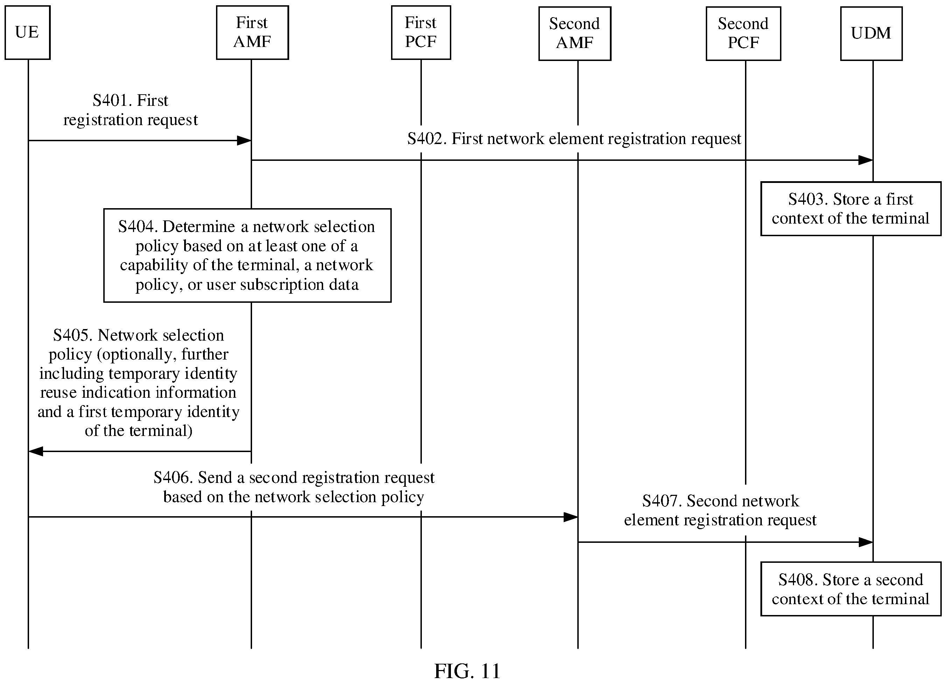

The embodiments shown in FIG. 8 to FIG. 10B describe a method in which an SNPN network controls, when a terminal registers with the SNPN network, the terminal to select the SNPN network to establish a session of a PLMN network. However, if the terminal supports dual radio, how to activate a capability of the terminal so that the terminal can simultaneously access services of the SNPN network and the PLMN network is a problem to be resolved in embodiments shown in FIG. 11 to FIG. 15C.

FIG. 11 is another schematic flowchart of a method for a terminal to access public and private networks according to an embodiment of this application. The method is based on the architecture shown in FIG. 3, and specifically, based on the architecture, shown in FIG. 7a, in which an SNPN network and a PLMN network each use an independent control plane. Certainly, this embodiment may also be applied to the architecture, shown in FIG. 7b, in which a first network and a second network share a control plane. For example, the method includes the following steps:

S401. A terminal sends a first registration request to an AMF of a first network ("first AMF" for short), where the first registration request is used to request registration of the terminal in the first network, and the first registration request includes a capability of the terminal; or sends the first registration request and the capability of the terminal.

The first registration request is used to request registration in the first network. The first registration request carries a permanent identifier of the UE, for example, a SUPI/SUCI, and the capability of the UE. The SUPI/SUCI of the UE includes an HPLMN ID of the UE. The capability of the UE includes the following information: supporting SR or DR. The first AMF may further receive an identifier (SNPN ID) of the first network from an SNPN RAN. It may be understood that, in this embodiment, an example in which the first network is an SNPN network and a second network is a PLMN network is used for description. In another embodiment, the first network may alternatively be a PLMN network, and the second network is an SNPN network. Accordingly, information content carried in the first registration request is different.

The capability of the terminal may be carried in the first registration request, or the capability of the terminal may be sent by using a separate message, for example, an RRC message.

S402. The first AMF sends a first network element registration request to a UDM, where the first network element registration request includes an identifier of the terminal and at least one piece of the following first information: an identifier of the first AMF, the identifier of the first network, an SNPN access mode, and a 3GPP access type.

The first AMF receives the first registration request of the UE, and performs registration of the UE in the first network. To enable the UDM to store a context of the UE (referred to as a first context of the terminal) in a registration process in the first network, the first AMF requests the UDM to perform network element registration. The first context of the terminal includes the at least one piece of first information.

S403. The UDM stores the first context of the terminal.

The UDM may store the first context of the terminal locally or in a cloud. Based on the first context of the terminal, another network element may determine the first AMF serving the terminal, or determine whether the terminal accesses the network by using the SNPN.

S404. The first AMF determines a network selection policy based on at least one of the capability of the terminal, a network policy, or user subscription data, where the network selection policy is used to indicate the terminal to register with the second network.

Specifically, in an implementation, the terminal supports dual radio, and the network policy is allowing the terminal to perform 3GPP registration twice in the second network by using a same subscription. In this case, the first AMF determines that the network selection policy is that the terminal may separately register with the first network and the second network.

In another implementation, the terminal supports single radio, and the network policy is allowing the terminal to perform 3GPP registration twice in the second network by using a same subscription. In this case, the first AMF determines that the network selection policy is that the terminal can only register with the first network.

In still another implementation, the terminal supports dual radio, and the network policy is prohibiting the terminal from performing 3GPP registration twice in the second network by using a same subscription. In this case, the first AMF determines that the network selection policy is that the terminal can only register with the first network.

In still another implementation, the first AMF obtains the user subscription data, where the user subscription data includes the network selection policy. The user subscription data is preconfigured in the UDM by an operator. If the network policy is allowing the terminal to perform 3GPP registration twice in the second network by using a same subscription, the first AMF determines that the network selection policy is that the terminal may separately register with the first network and the second network. If the network policy is prohibiting the terminal from performing 3GPP registration twice in the second network by using a same subscription, the first AMF determines that the network selection policy is that the terminal can only register with the first network.

Specifically, the network selection policy includes any one piece of the following information: an available PLMN ID/SNPN ID, a PLMN priority, and a second-registration indication of the terminal.

If the UE is currently registered in the SNPN, the network selection policy includes an available PLMN ID, so that the UE may select, based on the network selection policy, a PLMN to be accessed during second registration.

The PLMN priority is used to indicate a selection priority of a PLMN that the UE may select to access during second registration.

The second-registration indication of the terminal is used to indicate the terminal to perform second registration in the second network.

S405. The first AMF sends the network selection policy to the terminal.

S406. The terminal sends a second registration request to an AMF of the second network ("second AMF" for short) based on the network selection policy. The second registration request is used to request registration of the terminal in the second network.

After receiving the network selection policy sent by the first AMF, the terminal determines that second registration may be requested to be performed in the second network, and sends the second registration request to the second AMF, to request registration of the terminal in the second network.

Specifically, in an implementation, the network selection policy includes the second-registration indication of the terminal. In this case, based on the second-registration indication of the terminal, the PLMN network is selected to perform second registration.

In another implementation, the network selection policy includes the available PLMN ID. In this case, an available PLMN network is accessed to perform second registration.

In another implementation, the network selection policy includes the PLMN priority. In this case, based on the PLMN priority, a PLMN network with a higher access priority is selected to perform second registration.

The second registration request is used to request registration in the second network. The second registration request carries the permanent identifier of the UE, for example, the SUPI/SUCI, and the capability of the UE. The SUPI/SUCI of the UE includes the HPLMN ID of the UE. The capability of the UE includes the following information: supporting SR or DR. The second AMF may further receive an identifier of the second network from a PLMN RAN.

The capability of the terminal may be carried in the second registration request, or the capability of the terminal may be sent by using a separate message, for example, an RRC message.

S407. The second AMF sends a second network element registration request to the UDM, where the second network element registration request includes the identifier of the terminal and at least one piece of the following second information: an identifier of the second AMF, the identifier of the second network, the SNPN access mode, and the 3GPP access type.

The second AMF receives the second registration request of the UE, and performs registration of the UE in the second network. To enable the UDM to store a context of the UE (referred to as a second context of the terminal) in a registration process in the second network, the second AMF requests the UDM to perform network element registration. The second context of the terminal includes the at least one piece of second information.

S408. The UDM stores the second context of the terminal. Based on the second context of the terminal, another network element may determine the second AMF serving the terminal, or determine whether the terminal accesses the network by using the SNPN.

According to the method for a terminal to access public and private networks provided in this embodiment of this application, when the terminal supports dual radio, the terminal receives the network selection policy of a mobility management network element of the first network, and performs registration of the terminal in the second network based on the network selection policy. In this way, when the terminal has a dual radio capability, the terminal is allowed to perform registration twice, thereby fully activating the dual radio capability of the terminal. The terminal may simultaneously access the first network and the second network, and separately access services of the two networks.

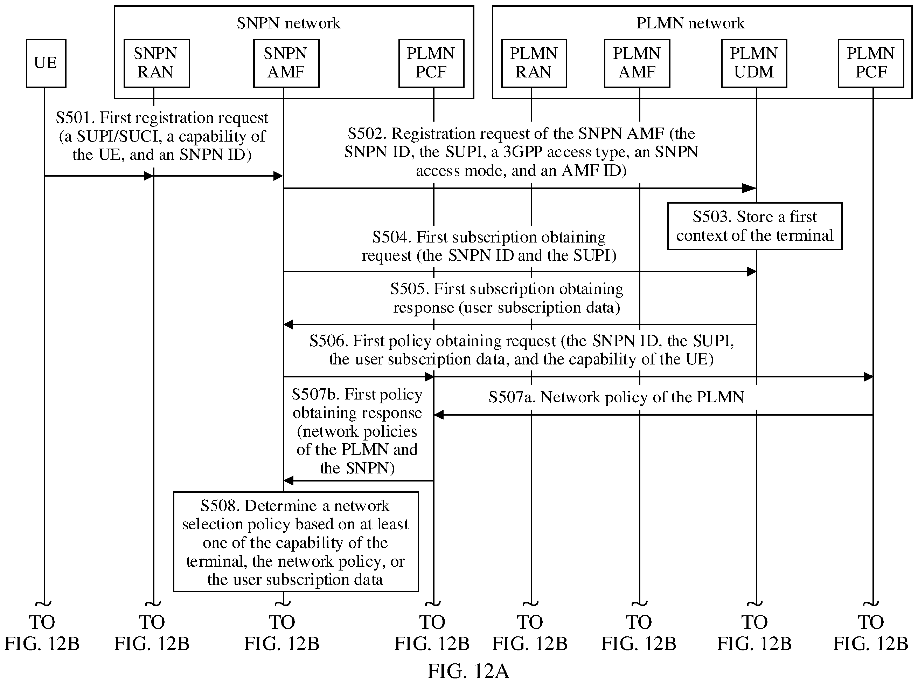

Specifically, based on the architecture, shown in FIG. 7a, in which an SNPN network and a PLMN network each use an independent control plane, that is, the SNPN network and the PLMN network each use an independent core network element, as shown in FIG. 12A to FIG. 12C, an embodiment of this application provides another schematic flowchart of a method for a terminal to access public and private networks. Different from the embodiments shown in FIG. 8 to FIG. 10B, in this embodiment, a terminal supports dual radio, and a second network allows the terminal to perform 3 GPP registration twice in the second network by using a same subscription. Therefore, the UE registers with an SNPN network (that is, a roaming location) and performs 3GPP registration twice in a PLMN network (that is, a local location). In addition, in this embodiment, the UE first accesses the SNPN network, and then accesses the PLMN network. For example, the method may include the following steps:

S501. The UE sends a first registration request to an SNPN AMF by using an SNPN RAN.

Correspondingly, the SNPN AMF receives the first registration request of the UE.

The first registration request is used to request registration in the SNPN network. The first registration request carries a permanent identifier of the UE, for example, a SUPI/SUCI, and a capability of the UE. The SUPI/SUCI of the UE includes an HPLMN ID of the UE. The capability of the UE includes the following information: supporting SR or DR. An SNPN ID is a PLMN ID and an NID. The SNPN AMF may further receive the SNPN ID from the SNPN RAN.

S502. The SNPN AMF sends a registration request of the SNPN AMF to a PLMN UDM.

Correspondingly, the PLMN UDM receives the registration request of the SNPN AMF.

The registration request of the SNPN AMF is used to request registration of the SNPN AMF in the PLMN network. The registration request of the SNPN AMF carries at least one piece of the following first information: the SNPN ID, the SUPI, a 3^{rd} Generation Partnership Project access type (3GPP access type), an SNPN access mode, and an AMF ID.

S503. The PLMN UDM stores a first context of the terminal, where the first context of the terminal includes the at least one piece of first information.

S504. The SNPN AMF sends a first subscription obtaining request to the PLMN UDM.

Correspondingly, the PLMN UDM receives the first subscription obtaining request.

The first subscription obtaining request is used to request to obtain user subscription data of the UE in the PLMN. The first subscription obtaining request carries the SNPN ID and the SUPI of the UE.

S505. The PLMN UDM sends a first subscription obtaining response to the SNPN AMF.

The SNPN AMF receives the first subscription obtaining response, where the first subscription obtaining response includes the user subscription data. The user subscription data includes the following information: a DNN/S-NSSAI available when the user accesses the SNPN network and the PLMN network, specifically including an LBO DNN/S-NSSAI and/or an HR DNN/S-NSSAI.

S506. The SNPN AMF sends a first policy obtaining request to an SNPN PCF (or referred to as a V-PCF). The SNPN PCF forwards the first policy obtaining request to a PLMN PCF.

Correspondingly, the SNPN PCF and the PLMN PCF receive the first policy obtaining request.

The first policy obtaining request is used to request to obtain a network policy. The first policy obtaining request message carries information such as the SNPN ID, the SUPI of the UE, the user subscription data, and the capability of the UE.

S507a. The PLMN PCF sends a network policy of the PLMN to the SNPN PCF.

S507b. The SNPN PCF sends a first policy obtaining response to the SNPN AMF.

Correspondingly, the SNPN AMF receives the first policy obtaining response.

The first policy obtaining response includes a local network policy of the SNPN network and the network policy of the PLMN.

S508. The SNPN AMF determines a network selection policy based on at least one of the capability of the UE, the network policy, or the user subscription data.

For specific implementation, refer to step S404 in the embodiment shown in FIG. 11.

S509. The SNPN AMF sends a first registration response message to the UE.

Correspondingly, the UE receives the first registration response message.

The first registration response message is used to indicate whether the UE successfully registers with the SNPN network or fails to register with the SNPN network. The first registration response message carries the network selection policy.

In addition, the first registration response message may further carry a globally unique temporary UE identity (globally unique temporary UE identity, GUTI) 1. A purpose of using the GUTI is to reduce displaying of the permanent identifier of the UE in communication, to improve security. Therefore, in a subsequent process of communication with the SNPN network, the UE may use the GUTI 1 instead of the SUPI/SUCI.

The SNPN AMF may further determine, based on a network topology, whether the GUTI 1 can be reused by the UE during second registration, and carry GUTI reuse indication information in the first registration response message. Specifically, the network topology means that the SNPN network and the PLMN network each use some or all independent core network elements, or the SNPN network and the PLMN network share a set of core network elements. If the SNPN network and the PLMN network each use some or all independent core network elements, the reuse indication information is used to indicate that the temporary identity of the terminal carried in the first registration response cannot be reused during second registration. If the SNPN network and the PLMN network share a set of core network elements, the reuse indication information is used to indicate that the temporary identity of the terminal carried in the first registration response can be reused during second registration.

In this embodiment, because the SNPN network and the PLMN network each use an independent core network element, the SNPN AMF and a PLMN AMF are not a same AMF. Therefore, the GUTI indication information herein is used to indicate that the GUTI 1 cannot be reused.

S510. When detecting that the PLMN network is available, the UE determines, based on the capability of the UE and the previously obtained network selection policy, whether to continue to perform second registration in the PLMN network.

S511. If the UE determines to perform second registration in the PLMN network, the UE accesses a PLMN RAN, and sends a second registration request to the PLMN AMF.

Correspondingly, the PLMN AMF receives the second registration request.

The second registration request is used to request registration in the PLMN network. Similar to step S501, a difference lies in that the UE may determine, based on the GUTI reuse indication information or based on implementation, whether to carry the GUTI 1 as a UE identity in the second registration request. However, in this embodiment, it is determined that the GUTI 1 is invalid. Therefore, the SUPI/SUCI continues to be carried in the second registration request.

S512. The PLMN AMF sends a registration request of the PLMN AMF to the PLMN UDM.

Correspondingly, the PLMN UDM receives the registration request of the PLMN AMF.

The PLMN AMF registers with the PLMN UDM, similar to step S502. A difference lies in that the registration request includes a PLMN ID, the SUPI, a 3GPP access type, and an AMF ID.

S513. The PLMN UDM stores a second context of the terminal.

S514. The PLMN AMF sends a second subscription obtaining request to the PLMN UDM.

Correspondingly, the PLMN UDM receives the second subscription obtaining request.

The subscription obtaining request process is similar to step S504. For details, refer to the description of step S504.

S515. The PLMN UDM sends a second subscription obtaining response to the PLMN AMF.

The subscription obtaining response process is similar to step S505. For details, refer to the description of step S505.

S516. The PLMN AMF sends a second policy obtaining request to the PLMN PCF.

Correspondingly, the PLMN PCF receives the second policy obtaining request.

For implementation of this step, refer to the description of step 506.

S517. The PLMN PCF sends a second policy obtaining response to the PLMN AMF.

Correspondingly, the PLMN AMF receives the second policy obtaining response.

The second policy obtaining response includes the network policy of the PLMN.

S518. The PLMN AMF sends a second registration response message to the UE.

Correspondingly, the UE receives the second registration response message. The second registration response message carries a GUTI 2.

S519. Based on an existing mechanism, the UE may establish a PDU session in the PLMN network and establish a PDU session in the SNPN network. If the UE attempts to establish an HR PDU session related to a public network service in the SNPN network, refer to steps S209 to S212 in the embodiment shown in FIG. 10A and FIG. 10B.

According to the method for a terminal to access public and private networks provided in this embodiment of this application, when the terminal supports dual radio, the terminal receives the network selection policy of a mobility management network element of the SNPN network, and performs registration of the terminal in the PLMN network based on the network selection policy. In this way, when the terminal has a dual radio capability, the terminal is allowed to perform registration twice, thereby fully activating the dual radio capability of the terminal. The terminal may simultaneously access the SNPN network and the PLMN network, and separately access services of the two networks.

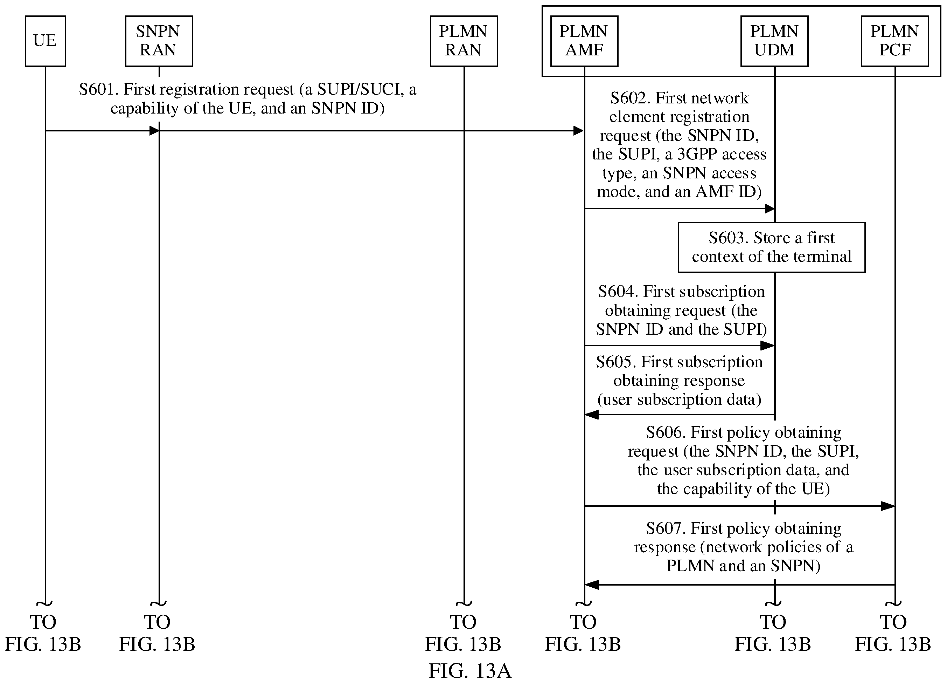

As shown in FIG. 13A to FIG. 13C, an embodiment of this application provides another schematic flowchart of a method for a terminal to access public and private networks. Different from the embodiment shown in FIG. 12A to FIG. 12C, this embodiment is based on the architecture, shown in FIG. 7b, in which an SNPN network and a PLMN network share a control plane, that is, the SNPN network and the PLMN network share a set of core network elements. For example, the method may include the following steps:
S601. UE sends a first registration request to a PLMN AMF by using an SNPN RAN.

Correspondingly, the PLMN AMF receives the first registration request of the UE.

For specific implementation of this step, refer to step S401 in the embodiment shown in FIG. 11 or step S501 in the embodiment shown in FIG. 12A. Different from the embodiment shown in FIG. 12A to FIG. 12C, an SNPN network and a PLMN network share one AMF.

S602. The PLMN AMF sends a registration request of the PLMN AMF to a PLMN UDM.

Correspondingly, the PLMN UDM receives the registration request of the PLMN AMF.

For specific implementation of this step, refer to step S402 in the embodiment shown in FIG. 11 or step S502 in the embodiment shown in FIG. 12A.

S603. The PLMN UDM stores a first context of the terminal.

For specific implementation of this step, refer to step S403 in the embodiment shown in FIG. 11 or step S503 in the embodiment shown in FIG. 12A.

S604. The PLMN AMF sends a first subscription obtaining request to the PLMN UDM.

Correspondingly, the PLMN UDM receives the first subscription obtaining request.

For specific implementation of this step, refer to step S504 in the embodiment shown in FIG. 12A.

S605. The PLMN UDM sends a first subscription obtaining response to the PLMN AMF.

For specific implementation of this step, refer to step S505 in the embodiment shown in FIG. 12A.

S606. The PLMN AMF sends a first policy obtaining request to a PLMN PCF.

Correspondingly, the PLMN PCF receives the first policy obtaining request.

For specific implementation of this step, refer to step S506 in the embodiment shown in FIG. 12A.

S607. The PLMN PCF sends a first policy obtaining response to the PLMN AMF.

For specific implementation of this step, refer to steps S507a and S507b in the embodiment shown in FIG. 12A.

S608. The PLMN AMF determines a network selection policy based on at least one of a capability of the terminal, a network policy, or user subscription data.

For specific implementation of this step, refer to step S404 in the embodiment shown in FIG. 11 or step S508 in the embodiment shown in FIG. 12A.

S609. The PLMN AMF sends a first registration response message to the UE.

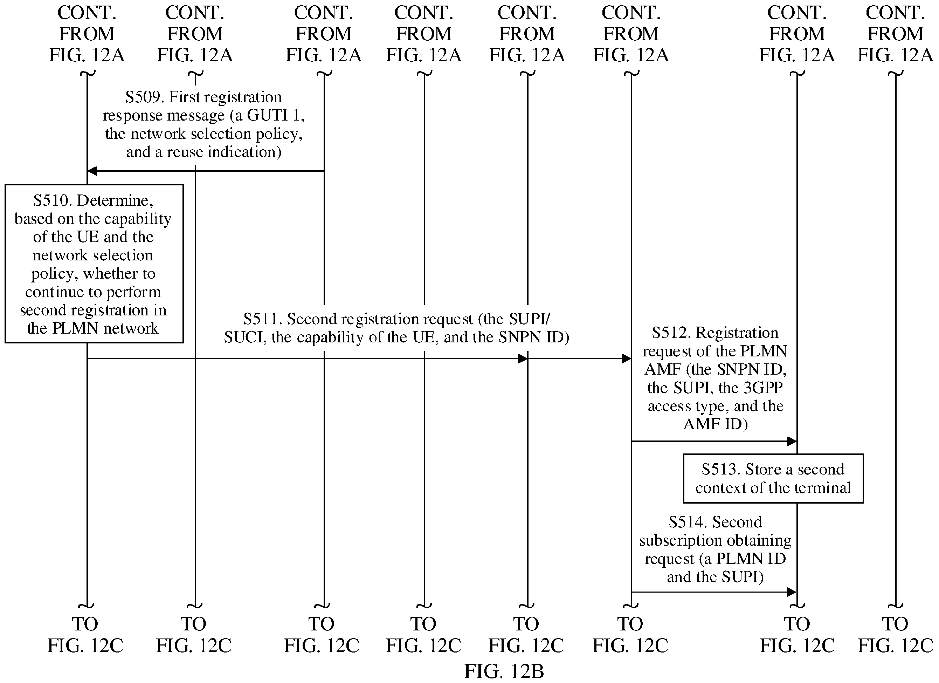

For specific implementation of this step, refer to step S509 in the embodiment shown in FIG. 12B. Different from the embodiment shown in FIG. 12A to FIG. 12C, the first registration response message includes GUTI 1 reuse indication information, and the reuse indication information is used to indicate that a GUTI 1 can be reused.

S610. When detecting that the PLMN network is available, the UE determines, based on the capability of the UE and the previously obtained network selection policy, whether to continue to perform second registration in the PLMN network.

For specific implementation of this step, refer to step S510 in the embodiment shown in FIG. 12B.

S611. The UE accesses a PLMN RAN, and sends a second registration request to the PLMN AMF.

Correspondingly, the PLMN AMF receives the second registration request.

The second registration request is used to request registration in the PLMN network. Similar to step S601, a difference lies in that the UE may determine, based on the GUTI reuse indication information or based on implementation, whether to carry the GUTI 1 as a UE identity in second registration. In this embodiment, it is determined that the GUTI 1 is valid. Therefore, the GUTI 1 continues to be carried in the second registration request.

S612. The PLMN AMF sends a registration request of the PLMN AMF to the PLMN UDM.

Correspondingly, the PLMN UDM receives the registration request of the PLMN AMF.

The PLMN AMF registers with the PLMN UDM, similar to step S602. A difference lies in that the registration request of the PLMN AMF does not carry an SNPN access mode.

S613. The PLMN UDM stores a second context of the terminal.

S614. The PLMN AMF sends a second subscription obtaining request to the PLMN UDM.

Correspondingly, the PLMN UDM receives the second subscription obtaining request.

For specific implementation of this step, refer to step S514 in the embodiment shown in FIG. 12B.

S615. The PLMN UDM sends a second subscription obtaining response to the PLMN AMF.

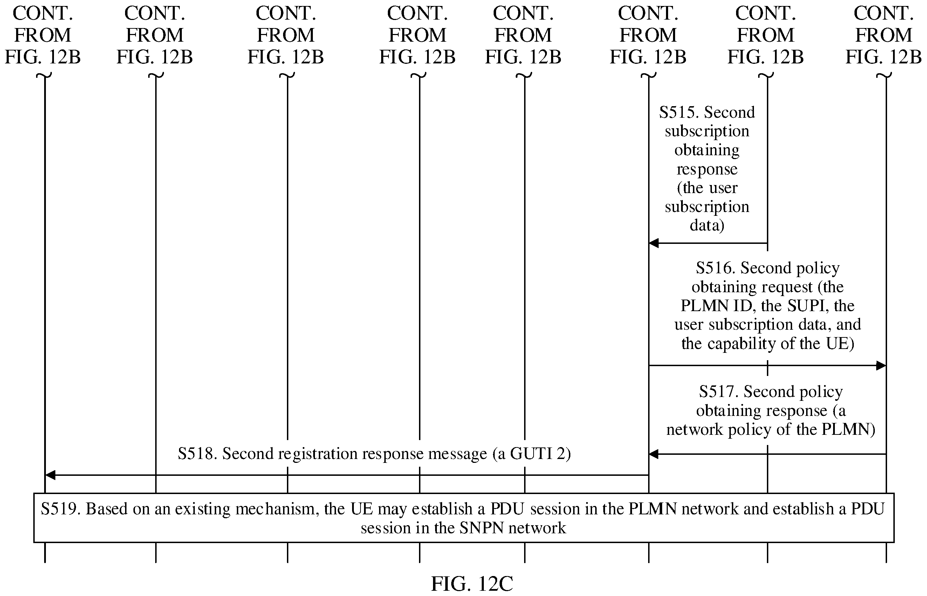

For specific implementation of this step, refer to step S515 in the embodiment shown in FIG. 12C.

S616. The PLMN AMF sends a second policy obtaining request to the PLMN PCF.

Correspondingly, the PLMN PCF receives the second policy obtaining request.

For specific implementation of this step, refer to step S516 in the embodiment shown in FIG. 12C.

S617. The PLMN PCF sends a second policy obtaining response to the PLMN AMF.

For specific implementation of this step, refer to step S517 in the embodiment shown in FIG. 12C.

S618. The PLMN AMF sends a second registration response message to the UE.

Correspondingly, the UE receives the second registration response message. The second registration response message carries the GUTI 1.

S619. Based on an existing mechanism, the UE may establish a PDU session in the PLMN network and establish a PDU session in the SNPN network. If the UE attempts to establish an HR PDU session related to a public network service in the SNPN network, refer to steps S209 to S212 in the embodiment shown in FIG. 10A and FIG. 10B.

According to the method for a terminal to access public and private networks provided in this embodiment of this application, when the terminal supports dual radio, the terminal receives the network selection policy of a mobility management network element of the SNPN network, and performs registration of the terminal in the PLMN network based on the network selection policy. In this way, when the terminal has a dual radio capability, the terminal is allowed to perform registration twice, thereby fully activating the dual radio capability of the terminal. The terminal may simultaneously access the SNPN network and the PLMN network, and separately access services of the two networks.

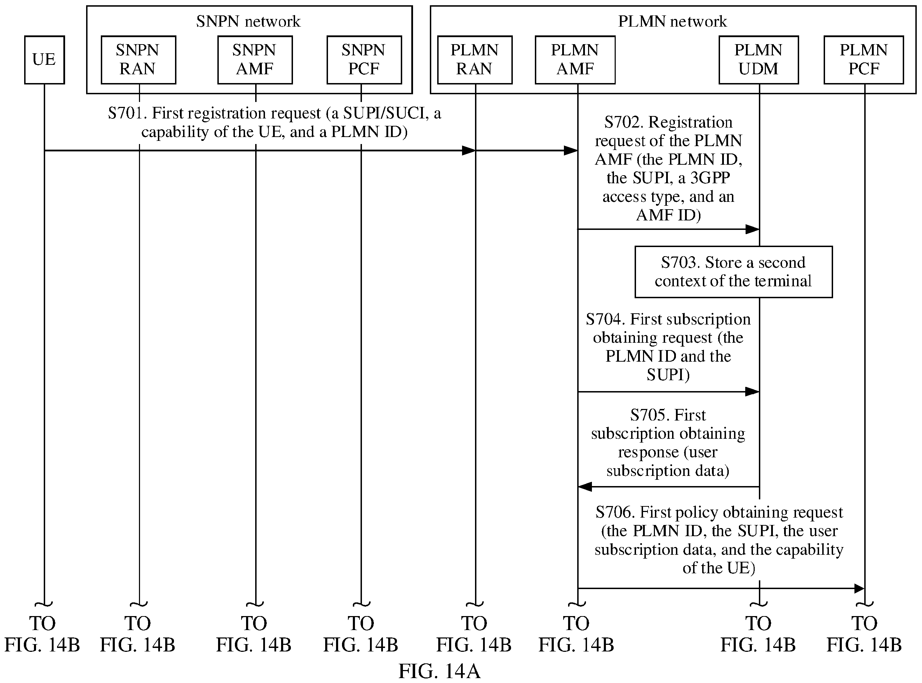

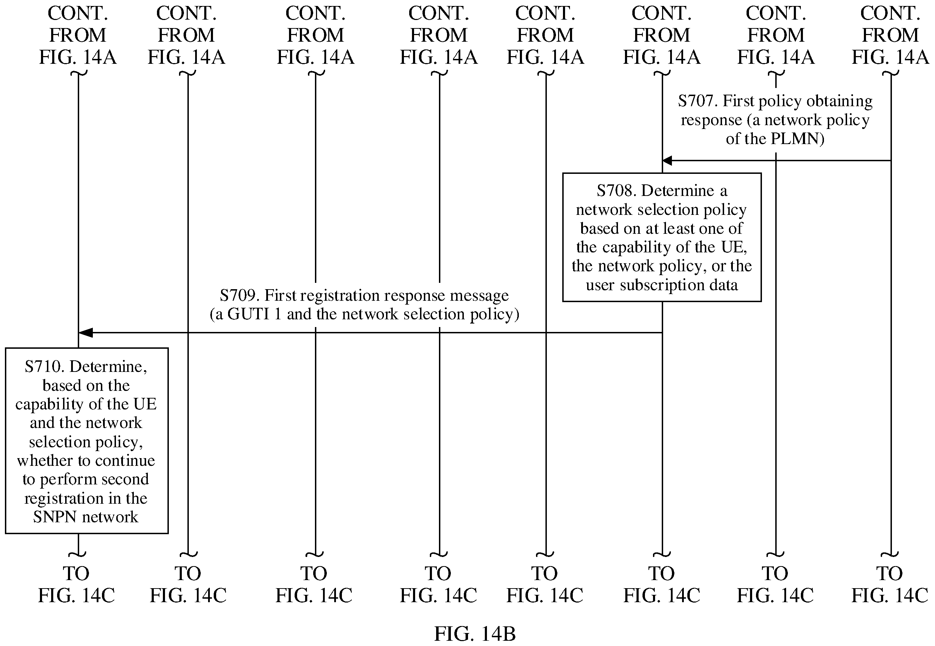

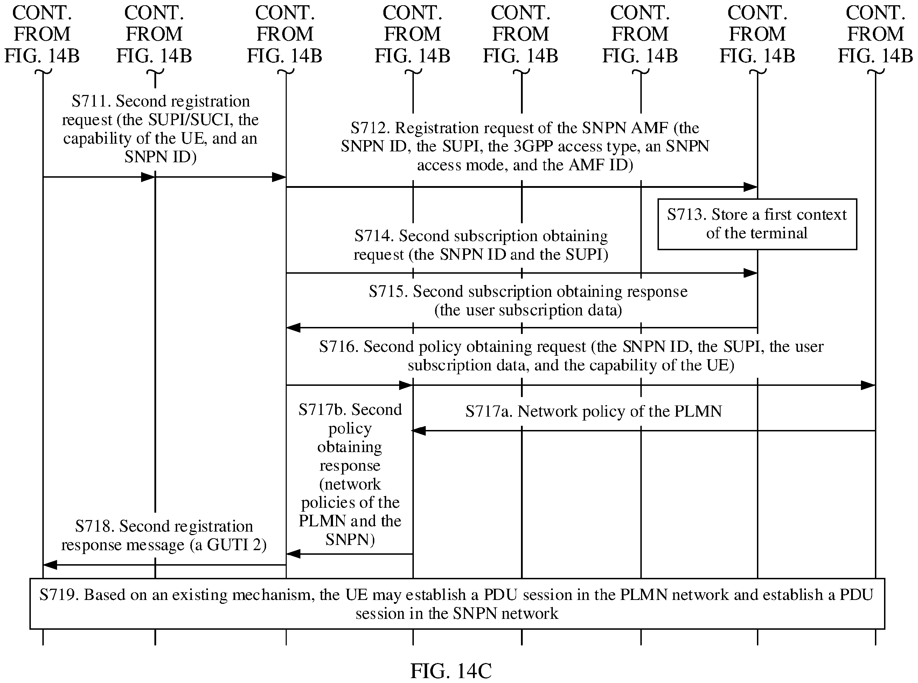

As shown in FIG. 14A to FIG. 14C, an embodiment of this application provides another schematic flowchart of a method for a terminal to access public and private networks. Different from the embodiments shown in FIG. 12A to FIG. 13C, in this embodiment, UE first accesses a PLMN network, and then accesses an SNPN network. This embodiment is based on the architecture, shown in FIG. 7a, in which an SNPN network and a PLMN network each use an independent control plane, that is, the SNPN network and the PLMN network each use an independent core network element. For example, the method may include the following steps:
S701. The UE sends a first registration request to a PLMN AMF by using a PLMN RAN.

Correspondingly, the PLMN AMF receives the first registration request of the UE.

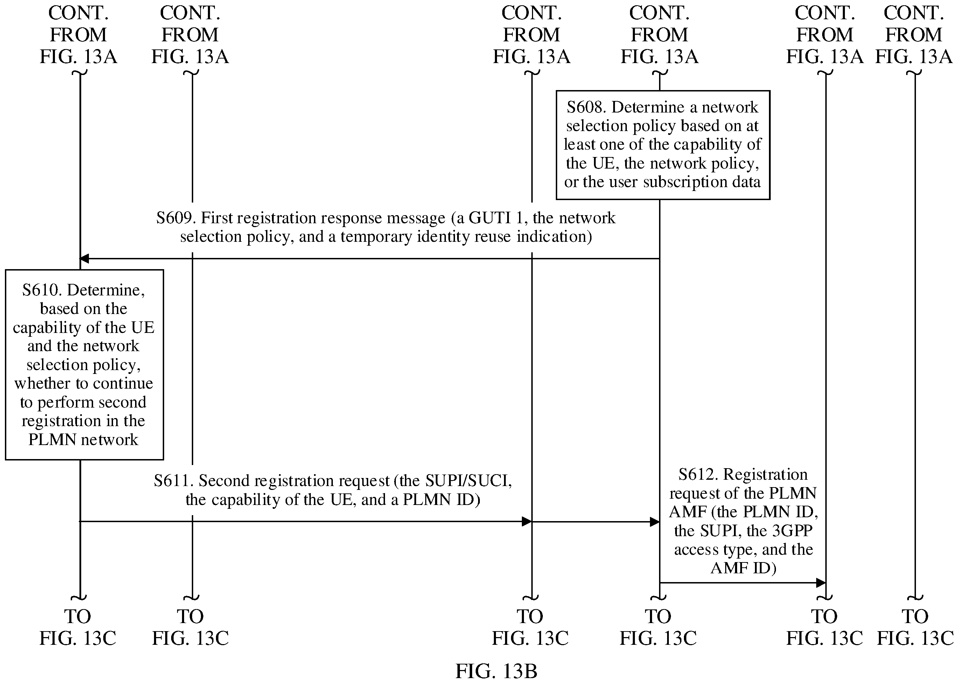

For specific implementation of this step, refer to step S511 in the embodiment shown in FIG. 12B or step S611 in the embodiment shown in FIG. 13B.

S702. The PLMN AMF sends a registration request of the PLMN AMF to a PLMN UDM.

Correspondingly, the PLMN UDM receives the registration request of the PLMN AMF.

For specific implementation of this step, refer to step S512 in the embodiment shown in FIG. 12B or step S612 in the embodiment shown in FIG. 13B.

S703. The PLMN UDM stores a second context of the terminal.

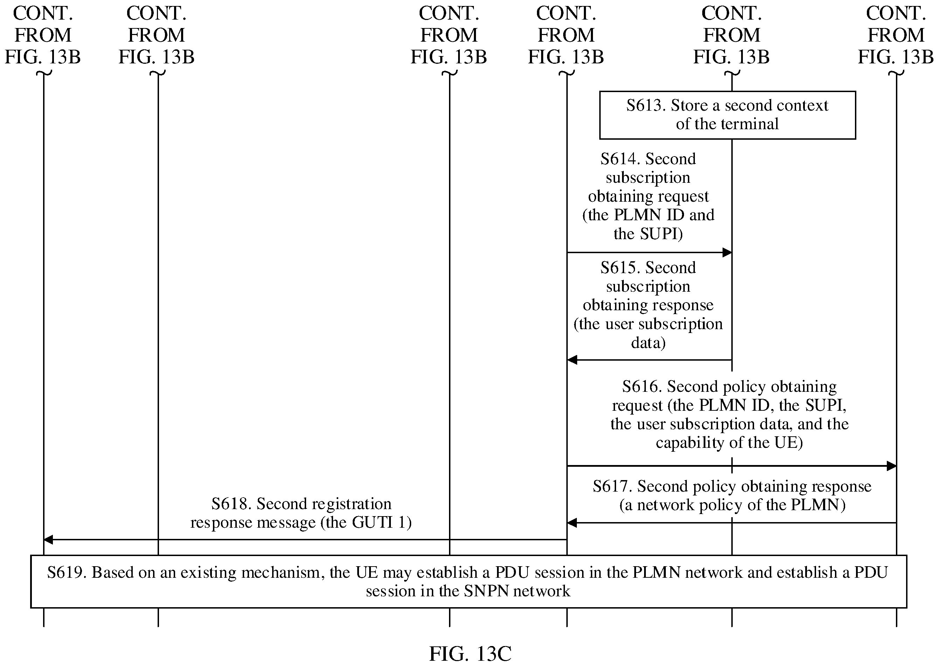

For specific implementation of this step, refer to step S513 in the embodiment shown in FIG. 12B or step S613 in the embodiment shown in FIG. 13C.

S704. The PLMN AMF sends a first subscription obtaining request to the PLMN UDM.

Correspondingly, the PLMN UDM receives the first subscription obtaining request.

For specific implementation of this step, refer to step S514 in the embodiment shown in FIG. 12B or step S614 in the embodiment shown in FIG. 13C.

S705. The PLMN UDM sends a first subscription obtaining response to the PLMN AMF.

For specific implementation of this step, refer to step S515 in the embodiment shown in FIG. 12C or step S615 in the embodiment shown in FIG. 13C.

S706. The PLMN AMF sends a first policy obtaining request to a PLMN PCF.

Correspondingly, the PLMN PCF receives the first policy obtaining request.

For specific implementation of this step, refer to step S516 in the embodiment shown in FIG. 12C or step S616 in the embodiment shown in FIG. 13C.

S707. The PLMN PCF sends a first policy obtaining response to the PLMN AMF, where the first policy obtaining response includes a network policy of the PLMN.

For specific implementation of this step, refer to step S517 in the embodiment shown in FIG. 12C or step S617 in the embodiment shown in FIG. 13C.

S708. The PLMN AMF determines a network selection policy based on at least one of a capability of the UE, the network policy, or user subscription data.

For specific implementation of this step, refer to step S508 in the embodiment shown in FIG. 12A or step S608 in the embodiment shown in FIG. 13B.

S709. The PLMN AMF sends a first registration response message to the UE.

Correspondingly, the UE receives the first registration response message.

For specific implementation of this step, refer to step S509 in the embodiment shown in FIG. 12B. The first registration response message is used to indicate whether the UE successfully registers with the SNPN network or fails to register with the SNPN network. The first registration response message carries the network selection policy. The first registration response message further carries GUTI reuse indication information and a GUTI 1, and the reuse indication information is used to indicate that the GUTI 1 cannot be reused.

S710. When detecting that the SNPN network is available, the UE determines, based on the capability of the UE and the previously obtained network selection policy, whether to continue to perform second registration in the SNPN network.

S711. The UE accesses an SNPN RAN, and sends a second registration request to an SNPN AMF.

Correspondingly, the SNPN AMF receives the second registration request.

For specific implementation of this step, refer to step S501 in the embodiment shown in FIG. 12A or step S601 in the embodiment shown in FIG. 13 A.

S712. The SNPN AMF sends a registration request of the SNPN AMF to the PLMN UDM.

Correspondingly, the PLMN UDM receives the registration request of the SNPN AMF.

For specific implementation of this step, refer to step S502 in the embodiment shown in FIG. 12A or step S602 in the embodiment shown in FIG. 13 A.

S713. The PLMN UDM stores a first context of the terminal.

S714. The SNPN AMF sends a second subscription obtaining request to the PLMN UDM.

Correspondingly, the PLMN UDM receives the second subscription obtaining request.

For specific implementation of this step, refer to step S504 in the embodiment shown in FIG. 12A or step S604 in the embodiment shown in FIG. 13A.

S715. The PLMN UDM sends a second subscription obtaining response to the SNPN AMF.

For specific implementation of this step, refer to step S505 in the embodiment shown in FIG. 12A or step S605 in the embodiment shown in FIG. 13A.

S716. The SNPN AMF sends a second policy obtaining request to an SNPN PCF.

Correspondingly, the SNPN PCF receives the second policy obtaining request.

For specific implementation of this step, refer to step S506 in the embodiment shown in FIG. 12A or step S606 in the embodiment shown in FIG. 13A.

S717a. The PLMN PCF sends the network policy of the PLMN to the SNPN PCF.

S717b. The SNPN PCF sends a second policy obtaining response to the SNPN AMF.

Correspondingly, the SNPN AMF receives the second policy obtaining response.

The second policy obtaining response includes a local network policy of the SNPN network and the network policy of the PLMN.

S718. The SNPN AMF sends a second registration response message to the UE.

Correspondingly, the UE receives the second registration response message. The second registration response message carries a GUTI 2.

S719. Based on an existing mechanism, the UE may establish a PDU session in the PLMN network and establish a PDU session in the SNPN network. If the UE attempts to establish an HR PDU session related to a public network service in the SNPN network, refer to steps S209 to S212 in the embodiment shown in FIG. 10A and FIG. 10B.

According to the method for a terminal to access public and private networks provided in this embodiment of this application, when the terminal supports dual radio, the terminal receives the network selection policy of a mobility management network element of the PLMN network, and performs registration of the terminal in the SNPN network based on the network selection policy. In this way, when the terminal has a dual radio capability, the terminal is allowed to perform registration twice, thereby fully activating the dual radio capability of the terminal. The terminal may simultaneously access the PLMN network and the SNPN network, and separately access services of the two networks.

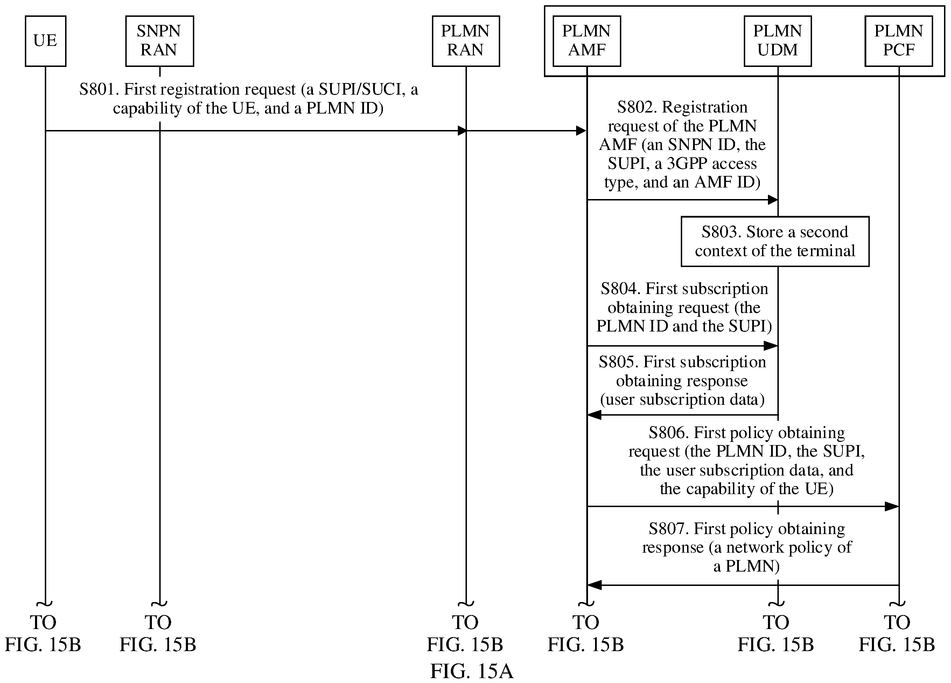

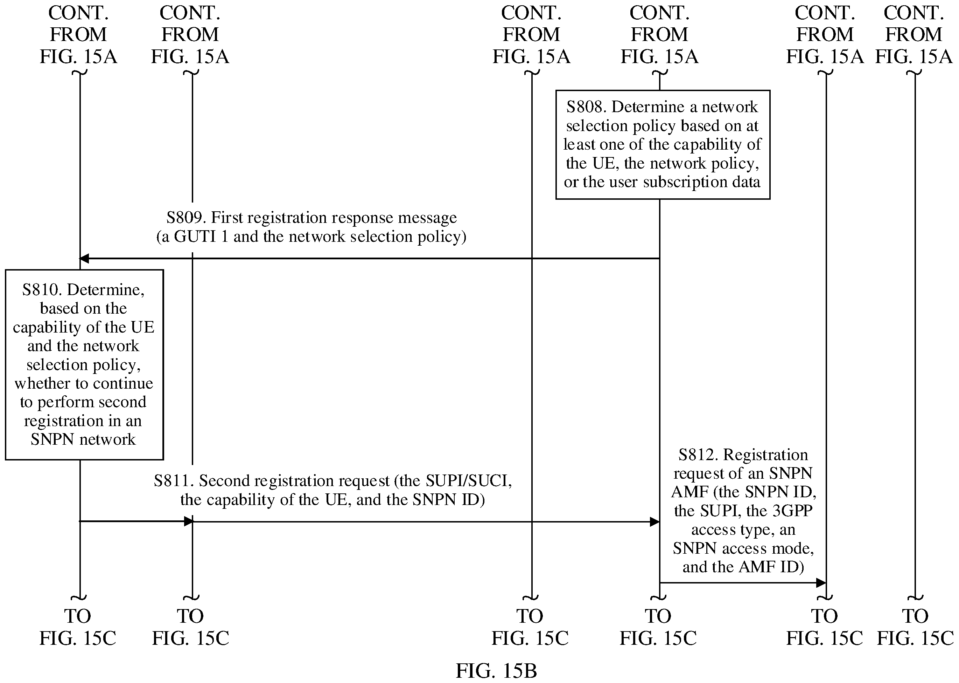

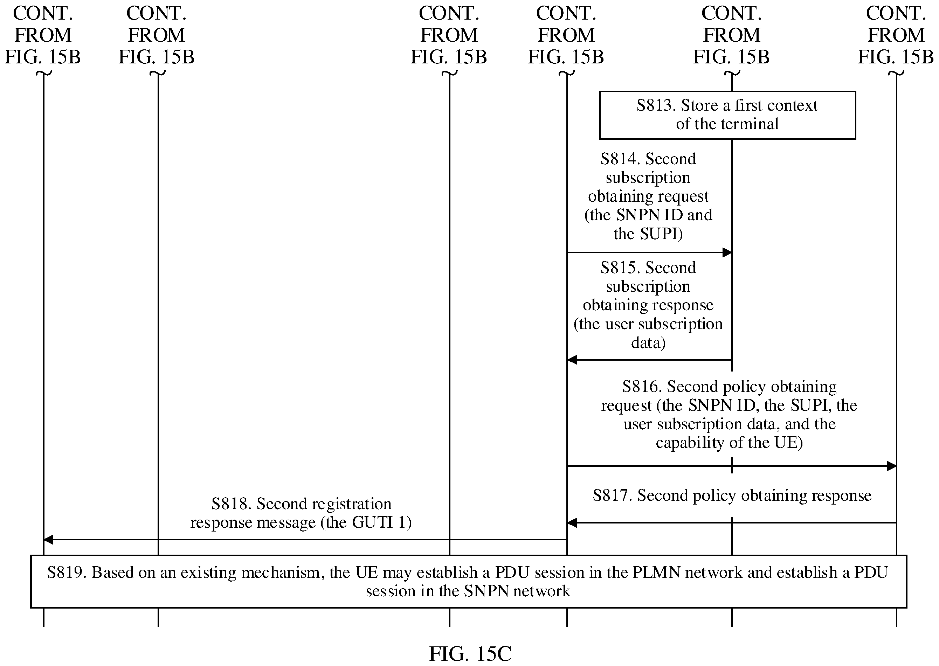

As shown in FIG. 15A to FIG. 15C, an embodiment of this application provides another schematic flowchart of a method for a terminal to access public and private networks. Different from the embodiment shown in FIG. 14A to FIG. 14C, this embodiment is based on the architecture, shown in FIG. 7b, in which an SNPN network and a PLMN network share a control plane, that is, the SNPN network and the PLMN network share a set of core network elements. For example, the method may include the following steps:
S801. UE sends a first registration request to a PLMN AMF by using a PLMN RAN.

Correspondingly, the PLMN AMF receives the first registration request of the UE.

For specific implementation of this step, refer to step S511 in the embodiment shown in FIG. 12B or step S611 in the embodiment shown in FIG. 13B.

S802. The PLMN AMF sends a registration request of the PLMN AMF to a PLMN UDM.

Correspondingly, the PLMN UDM receives the registration request of the PLMN AMF.

For specific implementation of this step, refer to step S512 in the embodiment shown in FIG. 12B or step S612 in the embodiment shown in FIG. 13B.

S803. The PLMN UDM stores a second context of the terminal.

For specific implementation of this step, refer to step S513 in the embodiment shown in FIG. 12B or step S613 in the embodiment shown in FIG. 13C.

S804. The PLMN AMF sends a first subscription obtaining request to the PLMN UDM.

Correspondingly, the PLMN UDM receives the first subscription obtaining request.

For specific implementation of this step, refer to step S514 in the embodiment shown in FIG. 12B or step S614 in the embodiment shown in FIG. 13C.

S805. The PLMN UDM sends a first subscription obtaining response to the PLMN AMF.

For specific implementation of this step, refer to step S515 in the embodiment shown in FIG. 12C or step S615 in the embodiment shown in FIG. 13C.

S806. The PLMN AMF sends a first policy obtaining request to a PLMN PCF.

Correspondingly, the PLMN PCF receives the first policy obtaining request.

For specific implementation of this step, refer to step S516 in the embodiment shown in FIG. 12C or step S616 in the embodiment shown in FIG. 13C.

S807. The PLMN PCF sends a first policy obtaining response to the PLMN AMF, where the first policy obtaining response includes a network policy of the PLMN.

For specific implementation of this step, refer to step S517 in the embodiment shown in FIG. 12C or step S617 in the embodiment shown in FIG. 13C.

S808. The PLMN AMF determines a network selection policy based on at least one of a capability of the UE, the network policy, or user subscription data.

For specific implementation of this step, refer to step S508 in the embodiment shown in FIG. 12A or step S608 in the embodiment shown in FIG. 13B.

S809. The PLMN AMF sends a first registration response message to the UE.

Correspondingly, the UE receives the first registration response message.

For specific implementation of this step, refer to step S509 in the embodiment shown in FIG. 12B. The first registration response message is used to indicate whether the UE successfully registers with the SNPN network or fails to register with the SNPN network. The first registration response message carries the network selection policy. The first registration response message further carries GUTI reuse indication information and a GUTI 1, and the reuse indication information is used to indicate that the GUTI 1 can be reused.

S810. When detecting that the SNPN network is available, the UE determines, based on the capability of the UE and the previously obtained network selection policy, whether to continue to perform second registration in the SNPN network.

S811. The UE accesses an SNPN RAN, and sends a second registration request to the PLMN AMF.

Correspondingly, the PLMN AMF receives the second registration request.

For specific implementation of this step, refer to step S501 in the embodiment shown in FIG. 12A or step S601 in the embodiment shown in FIG. 13A.

S812. The PLMN AMF sends a registration request of the PLMN AMF to the PLMN UDM.

Correspondingly, the PLMN UDM receives the registration request of the PLMN AMF.

For specific implementation of this step, refer to step S502 in the embodiment shown in FIG. 12A or step S602 in the embodiment shown in FIG. 13A.

S813. The PLMN UDM stores a first context of the terminal.

S814. The PLMN AMF sends a second subscription obtaining request to the PLMN UDM.

Correspondingly, the PLMN UDM receives the second subscription obtaining request.

For specific implementation of this step, refer to step S504 in the embodiment shown in FIG. 12A or step S604 in the embodiment shown in FIG. 13A.

S815. The PLMN UDM sends a second subscription obtaining response to the PLMN AMF.

For specific implementation of this step, refer to step S505 in the embodiment shown in FIG. 12A or step S605 in the embodiment shown in FIG. 13A.

S816. The PLMN AMF sends a second policy obtaining request to the PLMN PCF.

Correspondingly, the PLMN PCF receives the second policy obtaining request.

For specific implementation of this step, refer to step S506 in the embodiment shown in FIG. 12A or step S606 in the embodiment shown in FIG. 13A.

S817a. The PLMN PCF sends the network policy of the PLMN to the PLMN PCF.

S817b. The PLMN PCF sends a second policy obtaining response to the PLMN AMF.

Correspondingly, the PLMN AMF receives the second policy obtaining response.

The second policy obtaining response includes a local network policy of the SNPN network and the network policy of the PLMN.

S819. The PLMN AMF sends a second registration response message to the UE.

Correspondingly, the UE receives the second registration response message. The second registration response message carries the GUTI 1.

S823. Based on an existing mechanism, the UE may establish a PDU session in the PLMN network and establish a PDU session in the SNPN network. If the UE attempts to establish an HR PDU session related to a public network service in the SNPN network, refer to steps S209 to S212 in the embodiment shown in FIG. 10A and FIG. 10B.

According to the method for a terminal to access public and private networks provided in this embodiment of this application, when the terminal supports dual radio, the terminal receives the network selection policy of a mobility management network element of the PLMN network, and performs registration of the terminal in the SNPN network based on the network selection policy. In this way, when the terminal has a dual radio capability, the terminal is allowed to perform registration twice, thereby fully activating the dual radio capability of the terminal. The terminal may simultaneously access the PLMN network and the SNPN network, and separately access services of the two networks.

It may be understood that, in the foregoing embodiments, a method and/or a step implemented by the terminal may alternatively be implemented by a component (for example, a chip or a circuit) that may be used in the terminal; a method and/or a step implemented by the AMF may alternatively be implemented by a component (for example, a chip or a circuit) that may be used in the AMF; a method and/or a step implemented by the PCF may alternatively be implemented by a component (for example, a chip or a circuit) that may be used in the PCF; and a method and/or a step implemented by the UDM may alternatively be implemented by a component (for example, a chip or a circuit) that may be used in the UDM.

The foregoing mainly describes the solutions provided in embodiments of this application from the perspective of interaction between network elements. Correspondingly, the embodiments of this application further provide a communications apparatus, and the communications apparatus is configured to implement the foregoing methods. The communications apparatus may be the terminal in the foregoing method embodiments, or an apparatus including the terminal, or a component that may be used in the terminal. Alternatively, the communications apparatus may be the AMF in the foregoing method embodiments, or an apparatus including the AMF, or a component that may be used in the AMF. Alternatively, the communications apparatus may be the PCF in the foregoing method embodiments, or an apparatus including the PCF, or a component that may be used in the PCF. Alternatively, the communications apparatus may be the UDM in the foregoing method embodiments, or an apparatus including the UDM, or a component that may be used in the UDM. It may be understood that, to implement the foregoing functions, the communications apparatus includes a corresponding hardware structure and/or software module for performing the functions. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In the embodiments of this application, function module division may be performed on the communications apparatus based on the foregoing method embodiments. For example, each function module may be obtained through division corresponding to each function, or two or more functions may be integrated into one processing module. The integrated module may be implemented in a form of hardware, or may be implemented in a form of a software function module. It should be noted that, in embodiments of this application, division into the modules is an example and is merely logical function division. There may be another division manner in actual implementation.

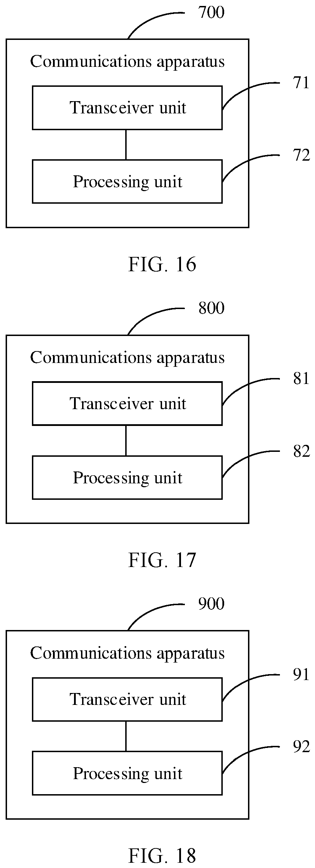

Based on a same concept of the method for a terminal to access public and private networks, as shown in FIG. 16, an embodiment of this application further provides a communications apparatus 700. The communications apparatus 700 includes a transceiver unit 71 and a processing unit 72.

The transceiver unit 71 is configured to send a first registration request, where the first registration request is used to request registration of a terminal in a first network. The transceiver unit 71 is further configured to receive a route selection policy of the terminal for a protocol data unit PDU session of a second network, where the route selection policy is used to indicate the terminal to select the first network to establish the PDU session of the second network, and the second network is a home network of the terminal. The processing unit 72 is configured to select, based on the route selection policy, the first network to establish the PDU session of the second network.

Optionally, the first registration request includes a capability of the terminal. Alternatively, the transceiver unit 71 is further configured to send a radio resource control message, where the radio resource control message includes a capability of the terminal.

Optionally, the processing unit 72 is configured to select, based on the route selection policy, the first network to send a session establishment request, where the session establishment request is used to request to establish the PDU session of the second network by using the first network.

Optionally, the transceiver unit 71 is further configured to receive a PDU session rejection response message, where the PDU session rejection response message includes a rejection reason, and the rejection reason is used to indicate that establishment of the PDU session of the second network by using the first network is rejected. The processing unit 72 is further configured to skip, based on the rejection reason, selecting the first network to request to establish the PDU session of the second network; or the processing unit 72 is further configured to start a timer, and skip, in a timing time, selecting the first network to request to establish the PDU session of the second network; or the processing unit 72 is further configured to update a local configuration of the terminal.

For specific implementation of the transceiver unit 71 and the processing unit 72, refer to the related description of the UE in the embodiments shown in FIG. 8 to FIG. 10B.

According to the communications apparatus provided in this embodiment of this application, when the communications apparatus registers with the first network, a policy management network element of the first network configures, for the terminal, the route selection policy of the communications apparatus for the PDU session of the second network, and the communications apparatus may select, based on the route selection policy, the first network to establish the PDU session of the second network. In this way, with permission of the first network, the communications apparatus may select the first network to establish the PDU session of the second network.

Based on a same concept of the method for a terminal to access public and private networks, as shown in FIG. 17, an embodiment of this application further provides a communications apparatus 800. The communications apparatus 800 includes a transceiver unit 81 and a processing unit 82. The transceiver unit 81 is configured to send a first registration request, where the first registration request is used to request registration of a terminal in a first network. The transceiver unit 81 is further configured to receive a route selection policy of the terminal for a protocol data unit PDU session of a second network, where the route selection policy is used to indicate the terminal to select the first network to establish the PDU session of the second network, and the second network is a home network of the terminal. The processing unit 82 is configured to select, based on the route selection policy, the first network to establish the PDU session of the second network.

Optionally, the first registration request includes a capability of the terminal. Alternatively, the transceiver unit 81 is further configured to send a radio resource control message, where the radio resource control message includes a capability of the terminal.

Optionally, the processing unit 82 is configured to select, based on the route selection policy, the first network to send a session establishment request, where the session establishment request is used to request to establish the PDU session of the second network by using the first network.

Optionally, the transceiver unit 81 is further configured to receive a PDU session rejection response message, where the PDU session rejection response message includes a rejection reason, and the rejection reason is used to indicate that establishment of the PDU session of the second network by using the first network is rejected. The processing unit 82 is further configured to skip, based on the rejection reason, selecting the first network to request to establish the PDU session of the second network; or the processing unit 82 is further configured to start a timer, and skip, in a timing time, selecting the first network to request to establish the PDU session of the second network; or the processing unit 82 is further configured to update a local configuration of the terminal.

For specific implementation of the transceiver unit 81 and the processing unit 82, refer to the related description of the PCF in the embodiments shown in FIG. 8 to FIG. 10B.

According to the communications apparatus provided in this embodiment of this application, when the terminal registers with the first network, the communications apparatus of the first network configures, for the terminal, the route selection policy of the terminal for the PDU session of the second network, and the terminal may select, based on the route selection policy, the first network to establish the PDU session of the second network. In this way, with permission of the first network, the terminal may select the first network to establish the PDU session of the second network.

Based on a same concept of the method for a terminal to access public and private networks, as shown in FIG. 18, an embodiment of this application further provides a communications apparatus 900. The communications apparatus 900 includes a transceiver unit 91 and a processing unit 92. The transceiver unit 91 is configured to receive a session establishment request from a terminal, where the session establishment request is used to request to establish a PDU session of a second network by using a first network. The processing unit 92 is configured to determine, based on at least one of a capability of the terminal or a network policy, that the terminal is not allowed to select the first network to establish the PDU session of the second network. The transceiver unit 91 is further configured to send a PDU session rejection response message to the terminal, where the PDU session rejection response message includes a rejection reason, and the rejection reason is used to indicate that establishment of the PDU session of the second network by using the first network is rejected.

Optionally, the processing unit 92 is specifically configured to: if the terminal supports dual radio, reject selection of the first network by the terminal to establish the PDU session of the second network; or if the terminal supports single radio, and the network policy prohibits the terminal from selecting the first network to establish the PDU session of the second network, reject selection of the first network by the terminal to establish the PDU session of the second network.

Optionally, the processing unit 92 is specifically configured to: if the terminal supports single radio, and the network policy allows the terminal to select the first network to establish the PDU session of the second network, determine that the terminal is allowed to select the first network to establish the PDU session of the second network.

For specific implementation of the transceiver unit 91 and the processing unit 92, refer to the related description of the AMF in the embodiments shown in FIG. 8 to FIG. 10B.

According to the communications apparatus provided in this embodiment of this application, when the terminal registers with the first network, and when the communications apparatus determines, based on at least one of the capability of the terminal or the network policy, that the terminal is not allowed to select the first network to establish the PDU session of the second network, establishment of the session by the terminal is rejected. In this way, selection of the first network by the terminal to establish the PDU session of the second network may be controlled.

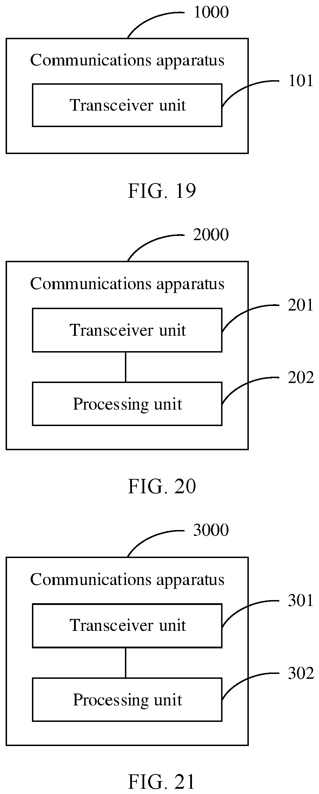

Based on a same concept of the method for a terminal to access public and private networks, as shown in FIG. 19, an embodiment of this application further provides a communications apparatus 1000. The communications apparatus 1000 includes a transceiver unit 101. The transceiver unit 101 is configured to send a first registration request, where the first registration request is used to request registration of a terminal in a first network, and the first registration request includes a capability of the terminal; or the transceiver unit 101 is configured to send the first registration request and the capability of the terminal. The transceiver unit 101 is further configured to receive a network selection policy, where the network selection policy is used to indicate the terminal to register with a second network. The transceiver unit 101 is further configured to send a second registration request based on the network selection policy, where the second registration request is used to request registration of the terminal in the second network.

Optionally, the transceiver unit 101 is further configured to receive temporary identity reuse indication information and a first temporary identity of the terminal, where the temporary identity reuse indication information is used to indicate whether the first temporary identity of the terminal can be reused when the terminal registers with the second network.

For specific implementation of the transceiver unit 101, refer to the related description of the terminal in the embodiments shown in FIG. 11 to FIG. 15C.

According to the communications apparatus provided in this embodiment of this application, when the communications apparatus supports dual radio, the communications apparatus receives the network selection policy of a mobility management network element of the first network, and performs registration of the communications apparatus in the second network based on the network selection policy. In this way, when the communications apparatus has a dual radio capability, the communications apparatus is allowed to perform registration twice, thereby fully activating the dual radio capability of the communications apparatus. The communications apparatus may simultaneously access the first network and the second network, and separately access services of the two networks.

Based on a same concept of the method for a terminal to access public and private networks, as shown in FIG. 20, an embodiment of this application further provides a communications apparatus 2000. The communications apparatus 2000 includes a transceiver unit 201 and a processing unit 202. The transceiver unit 201 is configured to receive a first registration request, where the first registration request is used to request registration of a terminal in a first network, and the first registration request includes a capability of the terminal; or the transceiver unit 201 is configured to receive the first registration request and the capability of the terminal. The processing unit 202 is configured to determine a network selection policy based on at least one of the capability of the terminal, a network policy, or a network topology, where the network selection policy is used to indicate the terminal to register with a second network. The transceiver unit 201 is further configured to send the network selection policy.

Optionally, the processing unit 202 is further configured to determine temporary identity reuse indication information based on the network topology, where the temporary identity reuse indication information is used to indicate whether a first temporary identity of the terminal can be reused when the terminal registers with the second network, and the network topology is used to indicate whether the first network and the second network share some or all core network elements. The transceiver unit 201 is further configured to send the temporary identity reuse indication information and the first temporary identity of the terminal.

Optionally, the transceiver unit 201 is further configured to receive a second registration request, where the second registration request is used to request registration of the terminal in the second network. The transceiver unit 201 is further configured to send a second registration response if the temporary identity reuse indication information is used to indicate that the first temporary identity of the terminal can be reused when the terminal registers with the second network, where the second registration response includes the first temporary identity of the terminal.

For specific implementation of the transceiver unit 201 and the processing unit 202, refer to the related description of the AMF in the embodiments shown in FIG. 11 to FIG. 15C.

According to the communications apparatus provided in this embodiment of this application, when the terminal supports dual radio, the terminal receives the network selection policy of the communications apparatus of the first network, and performs registration of the terminal in the second network based on the network selection policy. In this way, when the terminal has a dual radio capability, the terminal is allowed to perform registration twice, thereby fully activating the dual radio capability of the terminal. The terminal may simultaneously access the first network and the second network, and separately access services of the two networks.

Based on a same concept of the method for a terminal to access public and private networks, as shown in FIG. 21, an embodiment of this application further provides a communications apparatus 3000. The communications apparatus 3000 includes a transceiver unit 301 and a processing unit 302. The transceiver unit 301 is configured to receive a first network element registration request from a first mobility management network element, where the first network element registration request includes an identifier of a terminal and at least one piece of the following first information: an identifier of the first mobility management network element, an identifier of a first network, a standalone non-public network SNPN access mode, and a 3^{rd} Generation Partnership Project 3GPP access type. The processing unit 302 is configured to store a first context of the terminal, where the first context of the terminal includes the at least one piece of first information. The transceiver unit 301 is further configured to receive a second network element registration request from a second mobility management network element, where the second network element registration request includes the identifier of the terminal and at least one piece of the following second information: an identifier of the second mobility management network element, an identifier of a second network, an SNPN access mode, and a 3GPP access type. The processing unit 302 is further configured to store a second context of the terminal, where the second context of the terminal includes the at least one piece of second information.

For specific implementation of the transceiver unit 301 and the processing unit 302, refer to the related description of the UDM in the embodiments shown in FIG. 11 to FIG. 15C.

According to the communications apparatus provided in this embodiment of this application, when the terminal registers with different networks, the communications apparatus separately stores different contexts of the terminal.

It should be noted that one or more of the foregoing units or units may be implemented by software, hardware, or a combination of software and hardware. When any one of the foregoing modules or units is implemented by software, the software exists in a form of computer program instructions, and is stored in the memory. The processor may be configured to execute the program instructions and implement the foregoing method procedure. The processor may be built in a system on chip (system on chip, SoC) or an ASIC, or may be an independent semiconductor chip. In addition to a core that is configured to execute software instructions to perform operation or processing, the processor may further include a necessary hardware accelerator, such as a field programmable gate array (field programmable gate array, FPGA), a programmable logic device (programmable logic device, PLD), or a logic circuit that implements special logic operation.

When the foregoing units or units are implemented by hardware, the hardware may be any one or any combination of a central processing unit (central processing unit, CPU), a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or may not rely on software to perform the foregoing method procedure.

Optionally, an embodiment of this application further provides a chip system, including at least one processor and an interface. The at least one processor is coupled to a memory by using the interface. When the at least one processor executes a computer program or instructions in the memory, the method in any one of the foregoing method embodiments is performed. Optionally, the chip system may include a chip, or may include a chip and another discrete device. This is not specifically limited in this embodiment of this application.

It should be understood that, in the description of this application, unless otherwise stated, "/" indicates an "or" relationship between associated objects. For example, A/B may represent A or B. A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference. In addition, in embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner for ease of understanding.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Although this application is described with reference to embodiments, in a process of implementing this application that claims protection, a person skilled in the art may understand and implement another variation of the disclosed embodiments by viewing the appended drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

## Claims

1. A method for a terminal to access public and private networks, wherein the method comprises:
sending a first registration request, wherein the first registration request is used to request registration of a terminal in a first network;
receiving a route selection policy of the terminal for a protocol data unit PDU session of a second network, wherein the route selection policy is used to indicate the terminal to select the first network to establish the PDU session of the second network, and the second network is a home network of the terminal; and
selecting, based on the route selection policy, the first network to establish the PDU session of the second network.

2. The method according to claim 1, wherein the first registration request comprises a capability of the terminal; or
the method further comprises: sending a radio resource control message, wherein the radio resource control message comprises a capability of the terminal.

3. The method according to claim 2, wherein the capability of the terminal comprises supporting single radio by the terminal or supporting dual radio by the terminal.

4. The method according to any one of claims 1 to 3, wherein the selecting, based on the route selection policy, the first network to establish the PDU session of the second network comprises:
selecting, based on the route selection policy, the first network to send a session establishment request, wherein the session establishment request is used to request to establish the PDU session of the second network by using the first network.

5. The method according to claim 4, wherein the method further comprises:
receiving a PDU session rejection response message, wherein the PDU session rejection response message comprises a rejection reason, and the rejection reason is used to indicate that establishment of the PDU session of the second network by using the first network is rejected; and
skipping, based on the rejection reason, selecting the first network to request to establish the PDU session of the second network; or starting a timer, and skipping, in a timing time, selecting the first network to request to establish the PDU session of the second network; or updating a local configuration of the terminal.

6. The method according to claim 4 or 5, wherein the session establishment request comprises at least one of the following parameters: a data network identifier DNN and slice information, and the at least one parameter is used to indicate to establish the PDU session of the second network.

7. A method for a terminal to access public and private networks, wherein the method comprises:
obtaining at least one piece of the following information: a capability of a terminal and a network policy, wherein the capability of the terminal is used to indicate a capability of receiving and sending a signal by the terminal, and the network policy is used to indicate that a first network allows or prohibits the terminal from selecting the first network to establish a protocol data unit PDU session of a second network, and/or used to indicate that the second network allows or prohibits the terminal from registering with the second network twice by using a same subscription;
determining a route selection policy of the terminal for the protocol data unit PDU session of the second network based on at least one of the capability of the terminal or the network policy, wherein the route selection policy is used to indicate the terminal to select the first network to establish the PDU session of the second network; and
configuring the route selection policy for the terminal.

8. The method according to claim 7, wherein the capability of the terminal comprises supporting single radio by the terminal or supporting dual radio by the terminal.

9. The method according to claim 8, wherein the determining a route selection policy of the terminal for the PDU session of the second network based on at least one of the capability of the terminal or the network policy comprises:
if the terminal supports dual radio, and the terminal is allowed to register with the second network twice by using a same subscription, determining that the route selection policy is rejecting selection of the first network by the terminal to establish the PDU session of the second network; or
if the terminal supports single radio, and the terminal is prohibited from selecting the first network to establish the PDU session of the second network, determining that the route selection policy is rejecting selection of the first network by the terminal to establish the PDU session of the second network; or
if the terminal supports single radio, and the terminal is allowed to select the first network to establish the PDU session of the second network, determining that the route selection policy is allowing the terminal to select the first network to establish the PDU session of the second network.

10. The method according to any one of claims 7 to 9, wherein a session establishment request comprises at least one of the following parameters: a data network identifier DNN and slice information, and the at least one parameter is used to indicate to establish the PDU session of the second network.

11. A method for a terminal to access public and private networks, wherein the method comprises:
receiving a session establishment request from a terminal, wherein the session establishment request is used to request to establish a PDU session of a second network by using a first network;
determining, based on at least one of a capability of the terminal or a network policy, that the terminal is not allowed to select the first network to establish the PDU session of the second network; and
sending a PDU session rejection response message to the terminal, wherein the PDU session rejection response message comprises a rejection reason, and the rejection reason is used to indicate that establishment of the PDU session of the second network by using the first network is rejected.

12. The method according to claim 11, wherein the capability of the terminal comprises supporting single radio by the terminal or supporting dual radio by the terminal.

13. The method according to claim 12, wherein the determining, based on at least one of a capability of the terminal or a network policy, that the terminal is not allowed to select the first network to establish the PDU session of the second network comprises:
if the terminal supports dual radio, rejecting selection of the first network by the terminal to establish the PDU session of the second network; or
if the terminal supports single radio, and the network policy prohibits the terminal from selecting the first network to establish the PDU session of the second network, rejecting selection of the first network by the terminal to establish the PDU session of the second network.

14. The method according to claim 12 or 13, wherein the method further comprises:
if the terminal supports single radio, and the network policy allows the terminal to select the first network to establish the PDU session of the second network, determining that the terminal is allowed to select the first network to establish the PDU session of the second network.

15. The method according to any one of claims 11 to 14, wherein the session establishment request comprises at least one of the following parameters: a data network identifier DNN and slice information, and the at least one parameter is used to indicate to establish the PDU session of the second network.

16. A method for a terminal to access public and private networks, wherein the method comprises:
sending a first registration request, wherein the first registration request is used to request registration of a terminal in a first network, and the first registration request comprises a capability of the terminal, or sending the first registration request and the capability of the terminal;
receiving a network selection policy, wherein the network selection policy is used to indicate the terminal to register with a second network; and
sending a second registration request based on the network selection policy, wherein the second registration request is used to request registration of the terminal in the second network.

17. The method according to claim 16, wherein the capability of the terminal comprises supporting single radio by the terminal or supporting dual radio by the terminal.

18. The method according to claim 16 or 17, wherein the method further comprises: receiving temporary identity reuse indication information and a first temporary identity of the terminal, wherein the temporary identity reuse indication information is used to indicate whether the first temporary identity of the terminal can be reused when the terminal registers with the second network.

19. The method according to claim 18, further comprising:
receiving a second registration response, wherein
when the temporary identity reuse indication information is used to indicate that the first temporary identity of the terminal cannot be reused when the terminal registers with the second network, the second registration request comprises an identifier of the terminal, and the second registration response comprises a second temporary identity of the terminal; or
when the temporary identity reuse indication information is used to indicate that the first temporary identity of the terminal can be reused when the terminal registers with the second network, the second registration response comprises the first temporary identity of the terminal.

20. A method for a terminal to access public and private networks, wherein the method comprises:
receiving a first registration request, wherein the first registration request is used to request registration of a terminal in a first network, and the first registration request comprises a capability of the terminal, or receiving the first registration request and the capability of the terminal;
determining a network selection policy based on at least one of the capability of the terminal, a network policy, or a network topology, wherein the network selection policy is used to indicate the terminal to register with a second network; and
sending the network selection policy.

21. The method according to claim 20, wherein the method further comprises:
determining temporary identity reuse indication information based on the network topology, wherein the temporary identity reuse indication information is used to indicate whether a first temporary identity of the terminal can be reused when the terminal registers with the second network, and the network topology is used to indicate whether the first network and the second network share a core network element; and
sending the temporary identity reuse indication information and the first temporary identity of the terminal.

22. The method according to claim 21, wherein the method further comprises:
receiving a second registration request, wherein the second registration request is used to request registration of the terminal in the second network; and
sending a second registration response if the temporary identity reuse indication information is used to indicate that the first temporary identity of the terminal can be reused when the terminal registers with the second network, wherein the second registration response comprises the first temporary identity of the terminal.

23. A method for a terminal to access public and private networks, wherein the method comprises:
receiving a first network element registration request from a first mobility management network element, wherein the first network element registration request comprises an identifier of a terminal and at least one piece of the following first information: an identifier of the first mobility management network element, an identifier of a first network, a standalone non-public network SNPN access mode, and a 3^{rd} Generation Partnership Project 3GPP access type;
storing a first context of the terminal, wherein the first context of the terminal comprises the at least one piece of first information;
receiving a second network element registration request from a second mobility management network element, wherein the second network element registration request comprises the identifier of the terminal and at least one piece of the following second information: an identifier of the second mobility management network element, an identifier of a second network, an SNPN access mode, and a 3GPP access type; and
storing a second context of the terminal, wherein the second context of the terminal comprises the at least one piece of second information.

24. The method according to claim 23, wherein the first context of the terminal is used to determine the first mobility management network element serving the terminal, or determine whether the terminal performs access by using an SNPN network; and
the second context of the terminal is used to determine the second mobility management network element serving the terminal, or determine whether the terminal performs access by using an SNPN network.

25. A communications apparatus, comprising a unit configured to implement the method according to any one of claims 1 to 6.

26. A communications apparatus, comprising a unit configured to implement the method according to any one of claims 7 to 10.

27. A communications apparatus, comprising a unit configured to implement the method according to any one of claims 11 to 15.

28. A communications system, comprising the communications apparatus according to claim 26 and the communications apparatus according to claim 27.

29. A communications apparatus, comprising a unit configured to implement the method according to any one of claims 16 to 19.

30. A communications apparatus, comprising a unit configured to implement the method according to any one of claims 20 to 22.

31. A communications apparatus, comprising a unit configured to implement the method according to claim 23 or 24.

32. A communications system, comprising the communications apparatus according to claim 30 and the communications apparatus according to claim 31.

33. A computer-readable storage medium, storing a computer program, wherein when the program is executed by a processor, the method according to any one of claims 1 to 6, the method according to any one of claims 7 to 10, the method according to any one of claims 11 to 15, the method according to any one of claims 16 to 19, the method according to any one of claims 20 to 22, or the method according to claim 23 or 24 is implemented.

34. A computer program product, wherein when the computer program product is executed on a computing device, the method according to any one of claims 1 to 6, the method according to any one of claims 7 to 10, the method according to any one of claims 11 to 15, the method according to any one of claims 16 to 19, the method according to any one of claims 20 to 22, or the method according to claim 23 or 24 is implemented.
